# EUROPÄISCHE PATENTSCHRIFT

(11) **EP 1 238 364 B1**
(45) Veröffentlichungstag und Bekanntmachung des Hinweises auf die Patenterteilung: **06.08.2003**
(21) Anmeldenummer: 00988795.1
(22) Anmeldetag: 13.12.2000
(51) Int. Cl.: G06K 9/00

(54) **VERFAHREN ZUR VERARBEITUNG VON DATENSTRUKTUREN**
METHOD FOR PROCESSING DATA STRUCTURES
PROCEDE DE TRAITEMENT DE STRUCTURES DE DONNEES

(30) Priorität: 14.12.1999 DE 19960372
(43) Veröffentlichungstag der Anmeldung: 11.09.2002
(73) Patentinhaber: Definiens AG, 80339 München (DE)
(72) Erfinder: BAATZ, Martin, 80799 München (DE); SCHÄPE, Arno, 80339 München (DE); SCHMIDT, Günter, 82008 Unterhaching (DE)
(74) Vertreter: Winter, Brandl & Partner
(86) Internationale Anmeldenummer: EP0012681
(87) Internationale Veröffentlichungsnummer: WO01045033

(56) Entgegenhaltungen:
- BOTTONI P ET AL: "Matching the resolution level to salient image features" PATTERN RECOGNITION,US,PERGAMON PRESS INC. ELMSFORD, N.Y, Bd. 31, Nr. 1, 1998, Seiten 89-104, XP004101071 ISSN: 0031-3203
- KUAN D ET AL: "CONSTRAINT-BASED IMAGE UNDERSTANDING SYSTEM FOR AERIAL IMAGERY INTERPRETATION" PROCEEDINGS OF THE ANNUAL ARTIFICIAL INTELLIGENCE SYSTEMS IN GOVERNMENT CONFERENCE,US,WASHINGTON, IEEE COMP. SOC. PRESS, Bd. CONF. 4, 27. März 1989 (1989-03-27), Seiten 141-147, XP000040023
- FAHMY H ET AL: "A GRAPH-REWRITING PARADIGM FOR DISCRETE RELAXATION: APPLICATION TO SHEET-MUSIC RECOGNITION" INTERNATIONAL JOURNAL OF PATTERN RECOGNITION AND ARTIFICIAL INTE LLIGENCE,SI,WORLD SCIENTIFIC PUBLISHING COMPAGNY, SINGAPORE, Bd. 12, Nr. 6, 1. September 1998 (1998-09-01), Seiten 763-799, XP000781900 ISSN: 0218-0014
- DELLEPIANE S ET AL: "MODEL GENERATION AND MODEL MATCHING OF REAL IMAGES BY A FUZZY APPROACH" PATTERN RECOGNITION,US,PERGAMON PRESS INC. ELMSFORD, N.Y, Bd. 25, Nr. 2, 1. Februar 1992 (1992-02-01), Seiten 115-129,131-13, XP000263519 ISSN: 0031-3203
- NIEMANN H ET AL: "KNOWLEDGE BASED IMAGE UNDERSTANDING BY ITERATIVE OPTIMIZATION" ANNUAL GERMAN CONFERENCE ON ARTIFICIAL INTELLIGENCE,SPRINGER VERLAG, BERLIN,DE, Nr. 1, 17. September 1996 (1996-09-17), Seiten 287-301, XP000992226 in der Anmeldung erwähnt

## Beschreibung

Die vorliegende Erfindung betrifft ein allgemeines computerimplementiertes Verfahren zur objektorientierten Verarbeitung von Datenstrukturen, und betrifft insbesondere ein allgemeines computerimplementiertes Verfahren, das zur Mustererkennung, Gruppierung von Datenstrukturbereichen (Objektextraktion) und Simulation anhand der zu verarbeitenden Datenstrukturen und anhand einer Wissensbasis verwendbar ist.

Aus Bottoni et al.: **"Matching the resolution level to salient image features",** Pattern Recognition, US, Pergamon Press Inc. Elmsford, N.Y., Bd. 31, Nr. 1, 1998, Seiten 89 bis 104, ist ein Verfahren zur wissensbasierten Strukturbeschreibung von Hauptmerkmalen in Bildern bekannt, wobei verschiedene Auflösungsstufen, das heißt eine Gaußpyramide, der Bilder verwendet werden.

Aus Niemann H. et al.: **"Knowlegde Based Image Understanding by Iterative Optimization",** in KI-96, Bd. 1137, Seiten 287 bis 301, Springer-Verlag Berlin, 1996, ist ein Verfahren zur Verarbeitung von Datenstrukturen mittels miteinander vernetzten semantischen Einheiten bekannt, bei dem eine Datenstruktur erfaßt wird, wobei in iterativen Schritten semantische Struktureinheiten und/oder deren Vernetzung klassifiziert werden und aufgrund dieser Klassifikation eine spezifische Verarbeitung aktivierbar ist, welche eine jeweilige semantische Struktureinheit und/oder ein bestimmtes Teilnetz verändert.

Genauer gesagt ist es aus dieser Druckschrift bekannt, ein semantisches Netz zur Bildinterpretation bzw. zum Image-Understanding zu verwenden. Dabei werden mittels eines anfänglichen Segmentierungsverfahrens Bildobjekte sowie deren symbolische Beziehungen, Attribute usw. ausgebildet. Das Segmentierungsverfahren wird mit von einer Aufgabe unabhängigem Wissen ausgeführt, wobei lediglich für alle oder fast alle Arten von Bildern allgemeingültiges wissen zum Beispiel über Farbe, Textur oder Form verwendet wird.

Die derart erzeugten Bildobjekte bilden eine anfängliche Beschreibung des Bilds aus. Diese anfängliche symbolisch vorliegende Beschreibung bildet somit eine Schnittstelle hinsichtlich einer wissensbasierten Verarbeitung aus. Ausgehend von der anfänglichen Beschreibung des Bilds werden Optimierungsverarbeitungen durchgeführt, um letztendlich ein semantisches Netz zu erzeugen, welches eine bestmögliche Repräsentation des in dem Bild enthaltenen Wissens ermöglicht. Diese Optimierungsverfahren werden unter Verwendung von für eine jeweilige spezifische Aufgabe erforderliches a-priori-Wissen und von dessen internen Zusammenhängen durchgeführt.

Als Endergebnis der Optimierungsverarbeitungen liegt also ein semantisches Netz vor, welches eine Bildinterpretation darstellt.

Eine typische Schwierigkeit eines derartigen objektbasierten Bildverarbeitungsverfahrens stellt die Extraktion von derartigen Bildobjekten dar, die eine sehr gute Wiedergabe von sinnvollen Objekten in dem vorhandenen Bildmaterial entsprechend einer vorgegebenen Aufgabenstellung sind. Wie es zuvor beschrieben worden ist, werden zur Extraktion von Bildobjekten vorwissensfreie Segmentierungsverfahren verwendet, die eine Extraktion von Bildobjekten aufgrund eines Homogenitätskriteriums durchführen, das sich auf relativ allgemeine Parameter, wie zum Beispiel Farbe, Textur oder Form bezieht.

Aufgrund der Heterogenität von sinnvoll zu beschreibenden Objekten in Bildmaterialien, aufgrund von Verrauschung, aufgrund von stellenweiser Verdeckung und/oder aufgrund der begrenzten Information, die für einen bestimmten Bildbereich zur Verfügung gestellt werden kann, weisen derartige objektbasierte Bildverarbeitungsverfahren dahingehend erhebliche Nachteile auf, daß sehr häufig viel umfangreichere Informationen notwendig wären, um Entscheidungen bezüglich der Bildung von Bildobjekten treffen zu können. Dies schränkt die Flexibilität und die Anwendbarkeit von derartigen objektbasierten Bildverarbeitungsverfahren ein.

Dies gilt nicht nur für das Gebiet der Bildverarbeitung, sondern für viele Aufgabenstellungen, bei denen eine bestimmte Information aus einer beliebigen aus Einzeldaten bestehenden Datenstruktur gewonnen werden soll, da die sinnvolle Gruppierung von in der Datenstruktur enthaltenen Einzeldaten zu übergeordneten Einheiten, das heißt Strukturobjekten, entsprechend einer jeweiligen Aufgabenstellung ein notwendiger Schritt ist.

Es ist demgemäß die Aufgabe der vorliegenden Erfindung, ein computerimplementiertes Verfahren zur Mustererkennung und objektorientierten Verarbeitung von Datenstrukturen zu schaffen, das imstande ist, eine Gruppierung von in einer Datenstruktur enthaltenen Einzeldaten mit hoher Qualität den Erfordernissen einer jeweiligen Aufgabenstellung entsprechend durchzuführen.

Diese Aufgabe wird mit den in Anspruch 1 angegebenen Maßnahmen gelöst.

Genauer gesagt weist das erfindungsgemäße Verfahren zur Verarbeitung von Datenstrukturen mittels miteinander vernetzten semantischen Einheiten, die folgenden Schritte eines Erfassens einer Datenstruktur; und eines Erzeugens, Analysierens, Abwandelns, Löschens und/oder Speicherns von semantischen Struktureinheiten und/oder deren Vernetzung aufgrund der erfaßten Datenstruktur unter Verwendung einer aus einem Netz von semantischen Wissenseinheiten bestehenden Wissensbasis auf. Dabei werden in iterativen Schritten semantische Struktureinheiten und/oder deren Vernetzung klassifiziert und ist aufgrund dieser Klassifikation eine spezifische Verarbeitung aktivierbar, welche eine jeweilige semantische Struktureinheit und/oder ein bestimmtes Teilnetz verändert.

Insbesondere besteht ein wesentlicher Vorteil der vorliegenden Erfindung darin, daß sie erlaubt, lokal hochspezifische Analysen oder lokal hochspezifische Prozessierungen durchzuführen, wobei jeweils auch bestimmte Teilnetze, wie zum Beispiel die vernetzte Umgebung, mit einbezogen werden kann. Auf diese Weise ist es möglich, Entscheidungen zu treffen und Prozessierungen durchzuführen, die letztlich den Erfordernissen einer jeweiligen auch schwierigeren Aufgabenstellung in Bezug auf die Qualität von Gruppierung von Einzeldaten und von Klassifikation gerecht werden. Darüber hinaus besteht ein wesentlicher Vorteil darin, daß mit dem vorliegenden Verfahren auch nicht direkt in der erfaßten Datenstruktur enthaltene Informationen ergänzt werden können.

Erfindungsgemäß wurde ferner erkannt, daß in vielen Fällen eine sinnvolle Gruppierung von Einzeldaten aus der Datenstruktur zu Strukturobjekten, die ein Typus der Struktureinheiten sind, häufig scheitert, da eine derartige Gruppierung ein sehr aufwendiges Verfahren der Strukturbildung und eine sehr komplexe Verarbeitung in mehreren Teilschritten erfordert. Insbesondere können sich Kriterien, nach denen Strukturobjekte erzeugt und/oder verändert werden, von Strukturobjekt zu Strukturobjekt unterscheiden, oder können diese Kriterien abhängig von einem jeweiligen lokalen Kontext bzw. Zusammenhang eines Strukturobjekts und/oder seiner Klassifikation sein.

Wesentlich für die vorliegende Erfindung ist die Struktur von semantischen Netzen, mittels denen Strukturobjekte klassifiziert und aufgrund dieser Klassifikation Verfahren gestartet werden, welche die jeweiligen Strukturobjekte und/oder bestimmte Teilnetze, wie zum Beispiel die vernetzte Umgebung, verändern. Auf diese Weise können ausgehend von der zu verarbeiteten Datenstruktur Strukturobjekte ausgebildet und/oder verändert werden, wobei Kriterien für eine weitere Klassifikation und/oder Verarbeitung bzw. Prozessierung auf die vorhergehenden Schritte Bezug nehmen, indem zum Beispiel Eigenschaften von zuvor erzeugten und miteinander vernetzten Strukturobjekten in Beziehung gesetzt werden.

Daher können zum Beispiel in einem ersten Schritt Einzeldaten aufgrund eines einfachen Kriteriums zu Strukturobjekten gruppiert werden. Die derart erzeugten Strukturobjekte weisen neue Eigenschaften, wie zum Beispiel eine Ausdehnung, eine Varianz der in den Strukturobjekten enthaltenen Einzeldaten oder Beziehungen zu anderen vernetzten Strukturobjekten auf, die zu einer weiteren Klassifikation und/oder Verarbeitung verwendet werden können.

Mittels eines hierarchischen Netzes von Struktureinheiten kann eine Information der zugrundeliegenden Datenstruktur entsprechend deren Topologie in unterschiedlichen Auflösungen gleichzeitig repräsentiert werden, wobei ein Strukturobjekt, das ein Typus der Struktureinheiten ist, jeweils mit jeweiligen Nachbar-, Unter- und/oder Ober-Strukturobjekten von ihm über Verknüpfungsobjekte verknüpft ist, die ebenfalls ein Typus der Struktureinheiten sind. Aufgrund dieses hierarchischen Netzes von Struktureinheiten stehen weitere Informationen zur Verfügung, die dadurch erhalten werden, daß über Merkmale Beziehungen zwischen Strukturobjekten beschrieben und ausgewertet werden. Genauer gesagt kann in dem hierarchischen Netz von Struktureinheiten Information entlang von mittels der Verknüpfungsobjekte erzeugten Verknüpfungen prozessiert werden.

Ferner gibt es ein Netz von Wissenseinheiten. Um eine in einer Datenstruktur enthaltene Information prozessieren zu können, werden die beiden Netze von semantischen Struktureinheiten und von semantischen Wissenseinheiten miteinander verschränkt.

Wesentlich sind also die Arten der semantischen Einheiten aus den derartige Netze aufgebaut sind, die entsprechenden Netzstrukturen, und auf welche Weise Information prozessiert werden muß, um derartige Netze und die in ihnen enthaltenen semantischen Einheiten erzeugen, verändern und informationell nutzen zu können.

Strukturobjekte sind entweder jeweils eindeutig an einen bestimmten topologischen Bereich der erfaßten Datenstruktur gebunden und repräsentieren diesen und/oder Eigenschaften von ihm oder sie sind nicht oder nicht ausschließlich an einen bestimmten Bereich der erfaßten Datenstruktur gebunden, sondern ergänzen eine in der Datenstruktur nicht direkt enthaltene Information.

Über Strukturobjekte ergibt sich damit die Möglichkeit, eine lokale, den jeweiligen Bereich der erfaßten Datenstruktur betreffende Prozessierung durchzuführen. Die Strukturobjekte können auf unterschiedliche Weise untereinander und/oder mit anderen semantischen Einheiten verknüpft sein. Eine Klassifikation kann einerseits hinsichtlich von Eigenschaften von Strukturobjekten selbst und/oder andererseits hinsichtlich von Relationen zu Eigenschaften von anderen Strukturobjekten oder allgemein anderen semantischen Einheiten entlang von Verknüpfungen erfolgen.

Durch die Klassifikation von Verknüpfungen, das heißt einer lokalen Kontextinformation, ergibt sich eine bedeutsame Erhöhung der Möglichkeiten, Information zu beschreiben und zu prozessieren. Insbesondere ist es möglich, Prozessierungsschritte lokal unterschiedlich, das heißt an lokale Gegebenheiten angepaßt, handzuhaben. Dies bedeutet, daß bezüglich des Prozessierens lokale Entscheidungen getroffen werden, denen eine lokale Analyse vorhergeht. Es findet also ein dauerhaftes Wechselspiel zwischen lokalen Analysen, sich daraus ergebenden Klassifikationen und sich aufgrund der lokalen Klassifikation ergebenden lokalen Prozessen statt.

Die Möglichkeit derartiger lokaler Prozessierung schließt selbstverständlich globale Prozessierungsschritte nicht aus.

Das erfindungsgemäße Verfahren kann an einer beliebigen Datenstruktur angewendet werden, wobei ein Verarbeiten einer erfaßten Datenstruktur ein Handhaben, Analysieren, Wiedergeben, Beschreiben, Komprimieren und/oder Speichern der Datenstruktur beinhaltet. Dies schließt Datenbankanwendungen mit ein.

Die Verarbeitung der in einer Datenstruktur enthaltenen Information erfolgt im wesentlichen objektorientiert.

Eine derartige beliebige Datenstruktur können zum Beispiel statistische Daten oder technisch mittels von Sensoren erzeugte Daten sein.

Es kann sich zum Beispiel auch um eine beliebige digitale Bildinformation handeln. Diese digitale Bildinformation kann eine beliebige Bildgebung, eine beliebige Dimensionalität, wie zum Beispiel eindimensional, zweidimensional, dreidimensional, eine beliebige Kanalzahl und/oder Zeitfolgen aufweisen.

Zusammenfassend ist also anzumerken, daß die Vorteile des erfindungsgemäßen Verfahrens in den Möglichkeiten des Gruppierens von Einzeldaten und damit des Verarbeitens von Datenstrukturen in unterschiedlichen Auflösungen gleichzeitig, den Möglichkeiten des Berücksichtigens von lokaler Kontextinformation bei einem Prozessieren unter Nutzung der durch sinnvolle Vernetzung nutzbar gemachten Information und den Möglichkeiten des Anwendens von lokal unterschiedlichen und spezifischen Prozessierungsschritten liegen. Ferner ist anzumerken, daß das erfindungsgemäße Verfahren auch für eine Simulation auf Inhalten von Datenstrukturen, wie zum Beispiel Bildinhalten, verwendet werden kann.

Weitere vorteilhafte Ausgestaltungen der vorliegenden Erfindung sind Gegenstand der abhängigen Ansprüche.

Die vorliegende Erfindung wird nachstehend anhand von Ausführungsbeispielen unter Bezugnahme auf die beiliegende Zeichnung näher erläutert.

### Es zeigt:

- **Fig. 1**: eine schematische Darstellung eines hierarchischen Netzes von Struktureinheiten gemäß einem Ausführungsbeispiel der vorliegenden Erfindung;
- **Fig. 2**: eine Repräsentation einer Bildinformation durch Strukturobjekte in unterschiedlichen Auflösungen entsprechend der Darstellung in Fig. 1 gemäß dem Ausführungsbeispiel der vorliegenden Erfindung;
- **Fig. 3**: eine lokale Operation "Fusion" innerhalb des hierarchischen Netzes von Struktureinheiten anhand eines jeweiligen Netzausschnitts gemäß dem Ausführungsbeispiel der vorliegenden Erfindung;
- **Fig. 4**: eine lokale Operation "Gründen" innerhalb des hierarchischen Netzes von Struktureinheiten anhand eines jeweiligen Netzausschnitts gemäß dem Ausführungsbeispiel der vorliegenden Erfindung;
- **Fig. 5**: eine lokale Operation "Einhängen eines Nachbarn als Unter-Strukturobjekt" innerhalb des hierarchischen Netzes von Struktureinheiten anhand eines jeweiligen Netzausschnitts gemäß dem Ausführungsbeispiel der vorliegenden Erfindung;
- **Fig. 6**: eine lokale Operation "Ausgliedern" innerhalb des hierarchischen Netzes von Struktureinheiten anhand eines jeweiligen Netzausschnitts gemäß dem Ausführungsbeispiel der vorliegenden Erfindung;
- **Fig. 7**: eine lokale Operation "Einhängen eines neuen Unter-Strukturobjekts" innerhalb des hierarchischen Netzes von Struktureinheiten anhand eines jeweiligen Netzausschnitts gemäß dem Ausführungsbeispiel der vorliegenden Erfindung;
- **Fig. 8**: eine lokale Operation "Randoptimierung" innerhalb des hierarchischen Netzes von Struktureinheiten anhand eines jeweiligen Netzausschnitts gemäß dem Ausführungsbeispiel der vorliegenden Erfindung;
- **Fig. 9**: ein Beispiel einer vernetzten Umgebung eines klassifizierten Strukturobjekts und eines entsprechenden Klassenobjekts in schematischer Darstellung;
- **Fig. 10**: ein Beispiel einer Anordnung von Klassenobjekten in einer Vererbungshierarchie gemäß der Darstellung in **Fig. 9**;
- **Fig. 11**: ein Beispiel einer Anordnung der Klassenobjekte von **Fig. 10** in einer Gruppierungshierarchie;
- **Fig. 12**: eine Darstellung eines Original-Ausschnitts aus einem Satellitenbild;
- **Fig. 13**: eine Darstellung der Strukturobjekte in dem gleichen Bildausschnitt wie in **Fig. 12**;
- **Fig. 14**: eine Darstellung, in der gleiche Strukturobjekte gemäß der Gruppierungshierarchie in **Fig. 11** in der Farbe des jeweils mit ihnen verknüpften Klassenobjekts eingefärbt sind, in dem gleichen Bildausschnitt wie in **Fig. 12**; und
- **Fig. 15**: eine Darstellung, in der gleiche Strukturobjekte gemäß der Gruppierungshierarchie in **Fig. 11** in der Farbe der in der Gruppierungshierarchie nächsthöheren Klassenobjekte eingefärbt sind, in dem gleichen Bildausschnitt wie in **Fig. 12**.

Bezüglich der in dieser Anmeldung verwendeten Begriffe "semantisches Netz", "semantische Einheit", "Verknüpfungsobjekt" und "Prozessierungsobjekt" wird auf die Anmeldung des Anmelders der vorliegenden Erfindung mit dem amtlichen Aktenzeichen 199 08 204.9 mit dem Titel "Fraktales Netz n-ter Ordnung zum Behandeln komplexer Strukturen", eingereicht am 25. Februar 1999, und auf die Anmeldung des Anmelders der vorliegenden Erfindung mit dem amtlichen Aktenzeichen 199 175 92.6 mit dem Titel "Situationsabhängig operierendes semantisches Netz n-ter Ordnung", eingereicht am 19. April 1999, verwiesen, wobei die Begriffe "semantisches Netz" und "fraktales Netz" als gleichbedeutend anzusehen sind, die Begriffe "Januseinheit" und "Prozessierungsobjekt" als gleichbedeutend anzusehen sind und die Begriffe "Verknüpfungseinheit" und "Verknüpfungsobjekt" als gleichbedeutend anzusehen sind. Die in vorstehend genannten Anmeldungen offenbarten Merkmale bezüglich des Aufbaus und der Funktionsweise des "fraktalen Netzes", des "semantischen Netzes", der "semantischen Einheit", der "Verknüpfungseinheit" und der "Januseinheit" gelten als in dieser Anmeldung durch Verweis eingeschlossen.

Vorab ist anzumerken, daß das nachstehend beschriebene Verfahren sowohl auf einem einzelnen Computer als auch auf einem verteilten Netz von Computern, wie zum Beispiel einem LAN oder WAN, implementiert werden kann, wobei im letzteren Fall des Netzes von Computern die Bestandteile des semantischen Netzes sowohl zentral als auch dezentral vorliegen können. Das nachstehend beschriebene Verfahren kann also allgemein als computerimplemtiertes Verfahren bezeichnet werden, das eine erfaßte Datenstruktur verarbeitet.

Ferner ist anzumerken, daß, obgleich das nachstehend beschriebene Ausführungsbeispiel der vorliegenden Erfindung ein Verfahren zur Verarbeitung einer Bildinformation beschreibt, die vorliegende Erfindung nicht auf diesen Anwendungsbereich beschränkt ist. Vielmehr kann das erfindungsgemäße Verfahren an allen Datenstrukturen angewendet werden, die Einzeldaten enthalten, die in einem topologischen Zusammenhang stehen. Zum Beispiel können die Datenstrukturen Tondaten oder statistisch erhobene Daten (Data-Mining) sein.

Erfindungsgemäß wurde erkannt, daß in vielen Anwendungsfällen sinnvoll zu beschreibende Objekte in Datenstrukturen, das heißt Gruppierungen von Einzeldaten, zum Beispiel in digitalen Bildmaterialien, oft sehr schwer automatisch vorzunehmen sind. Sie können heterogen oder zum Teil verdeckt sein, es kann eine sehr aufwendige Semantik erforderlich sein, um zu beschreiben, welche Einzeldaten einer Datenstruktur, zum Beispiel Bildpunkte, zu einem bestimmten Objekt gehören, und/oder es unterscheiden sich Kriterien, die es zulassen, daß Objekte extrahiert werden können, zwischen unterschiedlichen Objektklassen in der gleichen Datenstruktur. Zum Beispiel wird mit dem nachstehend beschriebenen Verfahren eine Extrapolationsmöglichkeit geschaffen, die es zuläßt, daß Informationen, die nicht direkt in der erfaßten Datenstruktur enthalten sind, ergänzt werden können.

Ferner werden viel umfangreichere Informationen verwendet, um Entscheidungen zu treffen, als nur Informationen, die durch ein Strukturobjekt für sich alleine wiedergegeben werden können, wie zum Beispiel im Fall der Bildverarbeitung Farbe, Textur oder Form. Vielmehr sind es sehr häufig die Relationen oder Beziehungen, in denen zum Beispiel im Fall der Bildverarbeitung ein Bildbereich zu anderen Bildbereichen steht, die eine Entscheidung überhaupt erst ermöglichen. Eine derartige Beziehung kann zum Beispiel eine Einbettung in eine bestimmte Umgebung, eine Lagebeziehung, die Beziehung bestimmter Eigenschaften eines Objekts zu anderen Objekten oder eine Zusammensetzung von bestimmten Teilbereichen sein.

Demgemäß erfolgen in dem nachstehend beschriebenen Verfahren Verarbeitungsschritte nicht alleine nach globalen Kriterien, sondern werden diese auch spezifisch und lokal vorgenommen. Lokale Verarbeitung wird dabei durch Strukturobjekte, das heißt, die objekthafte Repräsentation eines Bereichs der erfaßten Datenstruktur, zum Beispiel einer Gruppe von Bildpunkten und damit eines Bildbereichs, ermöglicht.

Erst über derartige Strukturobjekte, die stellvertretend einen ganz bestimmten topologischen Bereich der Datenstruktur repräsentieren, können Entscheidungen und Prozessierungen bzw. Verarbeitungen lokal spezifisch durchgeführt werden. Zum Beispiel können Bildbereiche in Beziehung zueinander gebracht werden, indem Eigenschaften jeweiliger Strukturobjekte verglichen werden. Schließlich ist es möglich, über eine Klassifikation von Strukturobjekten lokal und spezifisch zu arbeiten. Zum Beispiel kann ein Bildbereich, der über sein Strukturobjekt einer Klasse "Wald" zugeordnet worden ist, mit einer "Wald-Logik" weiterverarbeitet werden. Das Verfahren baut also auf einer objektbasierten Verarbeitung von Bildinformation auf.

Die vorhergehenden Ausführungen werden aus der nachstehenden detaillierten Beschreibung des Ausführungsbeispiels der vorliegenden Erfindung deutlicher ersichtlich.

Ein wesentliches Merkmal des nachfolgend beschriebenen Verfahrens ist die formal unabhängige Betrachtung eines Netzes, das aus semantischen Wissenseinheiten besteht und die für eine Analyse und Prozessierung notwendige Wissensbasis enthält, und eines hierarchischen Netzes von semantischen Struktureinheiten, in denen die in der zu bearbeitenden Datenstruktur enthaltene Information (Einzeldaten) mittels Strukturobjekten in unterschiedlicher Auflösung gleichzeitig und darüber hinaus vernetzt vorliegt.

Für eine Prozessierung der in einer Datenstruktur enthaltenen Information werden diese beiden Netze von semantischen Struktureinheiten und von semantischen Wissenseinheiten immer wieder in gleicher oder unterschiedlicher Weise miteinander verschränkt.

Ein wesentliches Merkmal des nachfolgend beschriebenen Verfahrens ist daher die Art von semantischen Einheiten, aus denen die semantischen Netze aufgebaut werden, die entsprechenden Netzstrukturen, und wie Information verarbeitet werden muß, damit derartige Netze und die in ihnen enthaltenen Einheiten erzeugt, verändert und informationell genutzt werden können.

Um die Struktur der in dieser Anmeldung verwendeten semantischen Netze zu verdeutlichen, werden nachstehend zuerst die "Bausteine" eines semantischen Netzes, die semantischen Einheiten erläutert. Semantische Einheiten dienen der Aufnahme von Informationsinhalten und es gibt bei diesem Verfahren im wesentlichen sechs unterschiedliche Grundtypen von semantischen Einheiten, das heißt Strukturobjekte, Verknüpfungsobjekte, Klassenobjekte, Analyseobjekte, Prozessierungsobjekte und Merkmalsobjekte.

Strukturobjekte sind entweder jeweils eindeutig an eine bestimmten topologischen Bereich der erfaßten Datenstruktur gebunden und repräsentieren diesen und/oder Eigenschaften von ihm oder sie sind nicht oder nicht ausschließlich an einen bestimmten Bereich der erfaßten Datenstruktur gebunden, sondern ergänzen eine in der Datenstruktur nicht direkt enthaltene Information.

Verknüpfungsobjekte verknüpfen jeweils zwei beliebige semantische Einheiten derart miteinander, daß die Art und der Informationsinhalt eines jeweiligen Verknüpfungsobjekts die Beziehung der zwei semantischen Einheiten zueinander bestimmt.

Klassenobjekte repräsentieren eine Klasse und wenden insbesondere mit ihnen verknüpfte Analyseobjekte und/oder Prozessierungsobjekte auf semantische Einheiten an. Mittels der Klassenobjekte können semantische Einheiten analysiert, klassifiziert, unterschieden, einer Klasse zugeordnet und/oder selbst oder bestimmte Teilnetze verändert werden. Ein Klassenobjekt kann auch Attribute auf ihm zugeordnete semantische Einheiten übertragen. Klassenobjekte stellen die Grundeinheit für den immer wieder auf das Neue stattfindenden Zyklus "Analyse-Entscheidung-Prozessierung" dar.

Analyseobjekte beinhalten durch Verknüpfung zu Merkmalsobjekten Auswertealgorithmen, mit denen sie diejenigen semantischen Einheiten, mit denen sie verknüpft sind, und/oder bestimmte Teilnetze, zum Beispiel die jeweilige vernetzte Umgebung, analysieren. Analyseobjekte sind insbesondere an Klassenobjekte gebunden und werden auf diejenigen semantischen Einheiten angewendet, mit denen das jeweilige Klassenobjekt analysierend verbunden ist.

Prozessierungsobjekte beinhalten jeweils Prozessierungsalgorithmen, mit denen sie diejenigen semantischen Einheiten, mit denen sie verknüpft werden, und/oder bestimmte Teilnetze, zum Beispiel die jeweilige vernetzte Umgebung, verändern, sowie Ablaufsteuerungen bezüglich dieser Algorithmen. Prozessierungsobjekte sind insbesondere an Klassenobjekte gebunden und werden auf diejenigen semantischen Einheiten angewendet, mit denen das jeweilige Klassenobjekt prozessierend oder eventuell zuordnend verbunden ist.

Merkmalsobjekte enthalten Merkmalsbeschreibungen und Auswertealgorithmen zum Zwecke von lokalen Analysen. Derartige Merkmale und Auswertealgorithmen beinhalten zum Beispiel Attribute oder Schablonen.

Semantische Einheiten weisen einen Informationsinhalt auf. Dieser Informationsinhalt untergliedert sich in die drei Bereiche der Kennzeichnung bzw. der eindeutigen Adressierung (ID), der Daten und Funktionen der semantischen Einheit (DF) und der Auflistung aller Verknüpfungsobjekte, die eine jeweilige semantische Einheit mit anderen semantischen Einheiten verbinden. Die Auflistung der Verknüpfungsobjekte in einer semantischen Einheit kann zum Beispiel auch in einer gegliederten Form vorliegen, so daß die durch Verknüpfungsobjekte realisierten Beziehungen inhaltlich geordnet sind.

Der Begriff der semantischen Stuktureinheiten faßt Strukturobjekte, deren Verknüpfungen untereinander und Netze/Teilnetze von semantischen Struktureinheiten zusammen. Der Begriff der semantischen Wissenseinheiten faßt Merkmalsobjekte, Analyseobjekte, Prozessierungs-objekte, Klassenobjekte und deren Verknüpfungen untereinander zusammen.

Ein wesentlicher Begriff ist der Begriff eines "bestimmten Teilnetzes", unter dem hier und im weiteren Verlauf alle weiteren semantischen Struktureinheiten eines bestimmten Typus und/oder einer bestimmten Klassifikation in einer bestimmten Entfernung zu verstehen sind, die ausgehend von einer oder mehreren bestimmten semantischen Struktureinheiten direkt oder indirekt über andere semantischen Einheiten mit diesen verknüpft sind. Bei einem "bestimmten Teilnetz" kann es sich insbesondere auch um die vernetzte Umgebung einer semantischen Struktureinheit handeln.

Eine erste semantische Einheit wird zum Beispiel dann als einer vernetzten Umgebung einer zweiten semantischen Einheit zugehörig definiert, wenn eine Entfernung zwischen diesen kleiner als ein vorgegebener oder berechneter Wert, das heißt ein Grenzwert, ist. Dabei hängt ein Maß der Entfernung von Informations- und/oder Bedeutungsinhalten der semantischen Einheiten ab, über die die zweite semantische Einheit von der ersten semantischen Einheit aus erreichbar ist. Zum Beispiel ist es möglich, das Maß der Entfernung mit Gewichtungen in Verknüpfungsobjekten zu berechnen, wobei in diese Berechnung ebenso der Typus des Verknüpfungsobjekts eingehen kann.

Eine derartige gewichtete Verknüpfung wird zum Beispiel durch Eintragen einer Gewichtung in den Informationsinhalt einer semantischen Einheit realisiert. Die vernetzte Umgebung wird dann derart definiert, daß ausgehend von einer semantischen Einheit alle anderen direkt oder indirekt mit dieser semantischen Einheit verknüpften semantischen Einheiten zu der vernetzten Umgebung dieser semantischen Einheit gehören, die bei einem Aufmultiplizieren der Gewichtungen entlang des Verknüpfungswegs erreichbar sind, ohne daß ein vorbestimmter Schwellenwert über- bzw. unterschritten wird.

Wie es bereits zuvor erwähnt worden ist, verknüpfen Verknüpfungsobjekte semantische Einheiten untereinander. Verknüpfungsobekte sind eine wichtige Voraussetzung, um eine Bildsemantik zu modellieren und zu verarbeiten. Im einfachsten Fall ist ein Verknüpfungsobjekt eine Kennzeichnung bzw. ID, ein Zeiger bzw. Pointer oder eine logische Verknüpfung.

Die Art eines Verknüpfungsobjekts ist wesentlich verantwortlich für die Qualität einer Verknüpfung. Die Art eines Verknüpfungsobekts ist durch eine Bezeichnung des Verknüpfungsobjekts in dem jeweiligen Informationsinhalt und/oder durch den Ort oder die Auflistung in einer semantischen Einheit festgelegt, mit der das Verknüpfungsobekt verbunden ist. Bestimmte Typen von Verknüpfungsobjekten kennzeichnen jeweils ein Teilnetz bzw. einen Teilraum in einem fraktalen Netz mit hierarchischer Struktur.

Die durch Verknüpfungsobjekte realisierte Beziehung von zwei semantischen Einheiten muß nicht symmetrisch, das heißt in beide Richtungen eineindeutig, sein, wie zum Beispiel eine Beziehung "ist Nachbar von", sondern ist in den meisten Fällen vielmehr unsymmetrisch, daß heißt in beide Richtungen eindeutig, wie zum Beispiel eine Beziehung "ist Unterobjekt von" und "ist Oberobjekt von".

Es ist darauf hinzuweisen, daß Verknüpfungsobjekte wiederum über weitere Verknüpfungsobjekte verknüpft sein können. Dies führt zu einer allgemeinen fraktalen Struktur des Netzes. Im einzelnen können also semantische Einheiten über Verknüpfungsobjekte mit semantischen Einheiten verknüpft sein, können semantische Einheiten über Verknüpfungsobekte mit Verknüpfungsobjekten verknüpft sein und können Verknüpfungsobjekte über Verknüpfungsobjekte mit Verknüpfungsobjekten verknüpft sein. Dies führt zu einer fraktalen Struktur eines semantischen Netzes.

Die wichtigsten Typen von Verknüpfungsobjekten werden nachstehend detaillierter beschrieben.

Ein Verknüpfungsobjekt von Typus VS verknüpft Strukturobjekte miteinander.

Ein Verknüpfungsobjekt vom Typus VSH verknüpft Strukturobjekte hierarchisch miteinander und stellt eine unsymmetrische Verknüpfung dar, die zwischen Ober-Strukturobjekten und Unter-Strukturobjekten unterscheidet.

Ein Verknüpfungsobjekt vom Typus VSN verknüpft benachbarte Strukturobjekte miteinander und stellt eine symmetrische Verknüpfung dar. Unter dem Begriff "benachbart" sind hierbei Strukturobjekte der gleichen Hierarchiebene in dem hierachischen Netz von Strukturobjekten zu verstehen.

Ein Verknüpfungsobjekt vom Typus VK stellt eine Klassenverknüpfung dar, die eine semantische Einheit mit einem Klassenobjekt verknüpft.

Ein Verknüpfungsobjekt vom Typus VKA stellt eine klassifizierende Verknüpfung dar, die einen in einem mit einem jeweiligen Klassenobjekt verknüpften Analyseobjekt enthaltenen Auswertealgorithmus auf semantische Struktureinheiten und/oder bestimmte Teilnetze anwendet.

Ein Verknüpfungsobjekt vom Typus VKZ stellt eine zuordnende Klassenverknüpfung dar, die eine semantische Einheit einem Klassenobjekt und damit der durch das Klassenobjekt repräsentierten Klasse zuordnet. Ihre Bedeutung kann als "ist im allgemeinen" und "ist im speziellen" ausgedrückt werden, wodurch sie gleichbedeutend zu einem Verknüpfungsobjekt vom Typus VSH ist, die bereits erläutert worden ist. Ein Verknüpfungsobjekt vom Typus VKZ kann Attribute von dem jeweiligen Klassenobjekt auf die verknüpft semantische Einheit übertragen.

Ein Verknüpfungsobjekt vom Typus VKP stellt eine verarbeitende bzw. prozessierende Klassenverknüpfung dar, die einen in einem mit einem jeweiligen Klassenobjekt verknüpften Prozessierungsobjekt enthaltenen Prozessierungsalgorithmus auf die semantische Einheit und/oder bestimmte Teilnetze anwendet.

Ein Verknüpfungsobjekt vom Typus VÄ stellt eine Ähnlichkeitsverknüpfung dar, die Klassenobjekte entlang einer Ähnlichkeit von Merkmalsbeschreibungen hinsichtlich Analyseobjekten oder von Prozessierungsalgorithmen hinsichtlich Prozessierungsobjekten untereinander verknüpft, wodurch eine Ähnlichkeitshierarchie von Klassenobjekten erzeugt wird.

Ein Verknüpfungsobjekt vom Typus VÄH stellt eine hierarchische Ähnlichkeitsverknüpfung dar, die Klassenobjekte hierarchisch miteinander verknüpft und Verknüpfungen zu Analyseobjekten, Attributen und/oder Prozessierungsobjekten von Ober-Klassenobjekten zu Unter-Klassenobjekten vererbt.

Ein Verknüpfungsobjekt vom Typus VÄHA stellt eine hierarchische Ähnlichkeitverknüpfung bezüglich Merkmalsbeschreibungen hinsichtlich Analyseobjekten dar, die Verknüpfungen zu Analyseobjekten von Ober-Klassenobjekten zu Unter-Klassenobjekten vererbt.

Ein Verknüpfungsobjekt vom Typus VÄHJ stellt eine hierarchische Ähnlichkeitverknüpfung bezüglich Prozessierungsalgorithmen hinsichtlich Prozessierungsobjekten dar, die Verknüpfungen zu Prozessierungsobjekten von Ober-Klassenobjekten zu Unter-Klassenobjekten vererbt.

Ein Verknüpfungsobjekt vom Typus VÄN stellt eine nachbarschaftliche Ähnlichkeitsverknüpfung dar, die insbesondere derartige Klassenobjekte miteinander verknüpft, die über ein jeweiliges Verknüpfungsobjekt vom Typus VÄH mit dem gleichen Ober-Klassenobjekt verbunden sind und daher gleiche Merkmalsbeschreibungen hinsichtlich Analyseobjekten, Attributen und/oder Prozessierungsalgorithmen hinsichtlich Prozessierungsobjekten erben und in dieser Hinsicht als ähnlich betrachtet werden.

Ein Verknüpfungsobjekt vom Typus VÄNA stellt eine nachbarschaftliche Ähnlichkeitsverknüpfung bezüglich Merkmalsbeschreibungen hinsichtlich Analyseobjekten dar.

Ein Verknüpfungsobjekt vom Typus VÄNJ stellt eine nachbarschaftliche Ähnlichkeitsverknüpfung bezüglich Prozessierungsalgorithmen hinsichtlich Prozessierungsobjekten dar.

Ein Verknüpfungsobjekt vom Typus VG stellt eine Gruppierungsverknüpfung dar, die Klassenobjekte hinsichtlich ihrer semantischen Bedeutung miteinander verknüpft und sie gruppiert, wodurch eine Bedeutungshierarchie bzw. Gruppierungshierarchie von Klassenobjekten erzeugt wird.

Ein Verknüpfungsobjekt vom Typus VGH stellt eine hierarchische Gruppierungsverknüpfung, die Klassenobjekte hierarchisch untereinander verknüpft, wobei die semantische Bedeutung nach oben in der Hierarchie "ist im allgemeinen" und nach unter in der Hierarchie "ist im speziellen" ist. Dieses Verknüpfungsobjekt ist dahingehend mit einem Verknüpfungsobjekt vom Typus VKZ verwandt, daß anstelle eines Strukturobjekts, wie dies bei dem Verknüpfungsobjekt vom Typus VKZ der Fall ist, hier ein Klassenobjekt einem anderen Klassenobjekt als Unter-Klassenobjekt zugeordnet wird.

Ein Verknüpfungsobjekt vom Typus VGN stellt eine nachbarschaftliche Gruppierungsverknüpfung dar, die Klassenobjekte ähnlicher semantischer Bedeutung nachbarschaftlich, das heißt auf der gleichen Hierarchieebene, miteinander verknüpft.

Ein Verknüpfungsobjekt vom Typus VM stellt eine Merkmalsverknüpfung dar, die Analyseobjekte und Merkmalsobjekte untereinander verknüpft und in den Merkmalsobjekten enthaltene Merkmalsbeschreibungen und Auswertealgorithmen auf die semantischen Struktureinheiten anwendet, die mit einem jeweiligen Analyseobjekt verbunden sind.

Ein Verknüpfungsobjekt vom Typus VÄG stellt eine gruppierende Ähnlichkeitsverknüpfung dar, die die Eigenschaften und Funktionen sowohl des Verknüpfungsobjekts vom Typus VÄ als auch des Verknüpfungsobjekts vom Typus VG aufweist.

Ein Verknüpfungsobjekt vom Typus VÄGH stellt eine hierarchische gruppierende Ähnlichkeitsverknüpfung dar, die die Eigenschaften und Funktionen sowohl des Verknüpfungsobjekts vom Typus VÄG als auch des Verknüpfungsobjekts vom Typus VGH aufweist.

Ein Verknüpfungsobjekt vom Typus VÄGHA stellt eine hierarchische gruppierende Ähnlichkeitsverknüpfung dar, die die Eigenschaften und Funktionen sowohl des Verknüpfungsobjekts vom Typus VÄHA als auch des Verknüpfungsobjekts vom Typus VGH aufweist.

Ein Verknüpfungsobjekt vom Typus VÄGHJ stellt eine hierarchische gruppierende Ähnlichkeitsverknüpfung dar, die die Eigenschaften und Funktionen sowohl des Verknüpfungsobjekts vom Typus VÄHJ als auch des Verknüpfungsobjekts vom Typus VGH aufweist.

Ein Verknüpfungsobjekt vom Typus VÄGN stellt eine nachbarschaftliche gruppierende Ähnlichkeitsverknüpfung dar, die die Eigenschaften und Funktionen sowohl des Verknüpfungsobjekts vom Typus VÄN als auch des Verknüpfungsobjekts vom Typus VGN aufweist.

Nachstehend erfolgt die Beschreibung des hierarchischen semantischen Netzes von Struktureinheiten mittels der zuvor beschriebenen Strukturobjekte und deren Verknüpfungen.

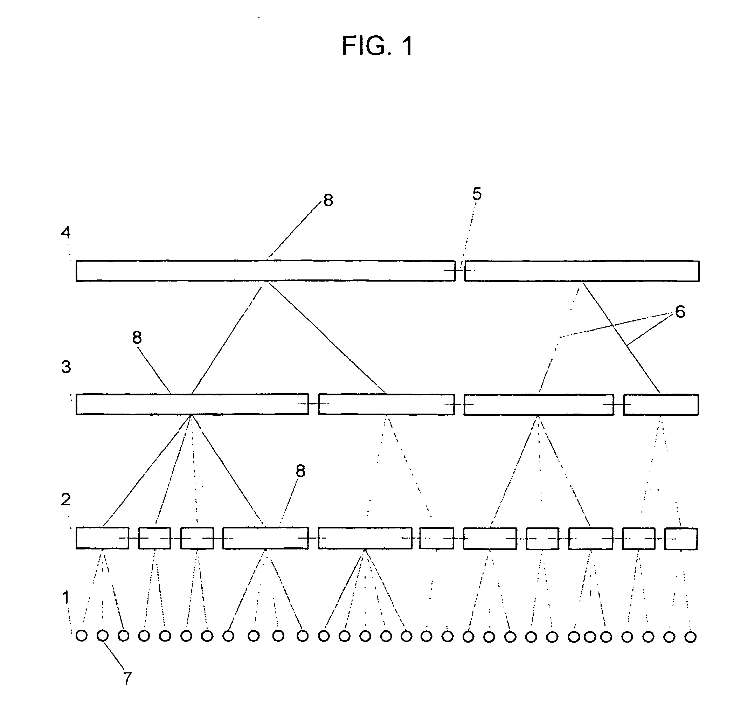

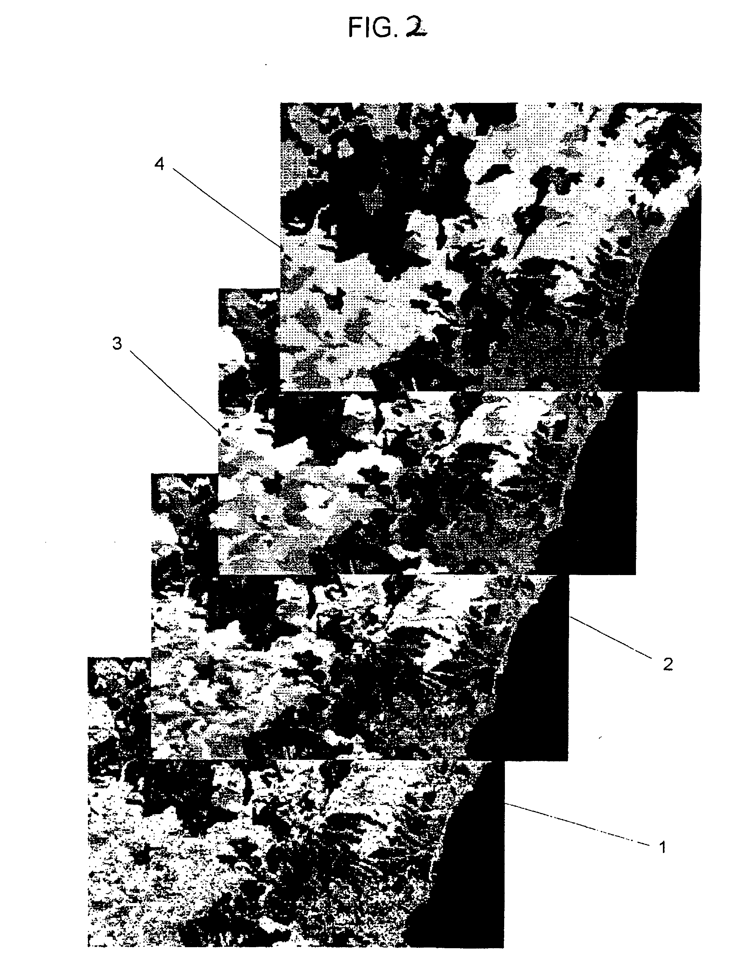

**Fig. 1** zeigt eine semantische Darstellung eines hierarchischen Netzes von Struktureinheiten gemäß dem Ausführungsbeispiel der vorliegenden Erfindung und **Fig. 2** zeigt eine Repräsentation einer Bildinformation durch Strukturobjekte in unterschiedlichen Auflösungen entsprechend der Darstellung in **Fig. 1** gemäß dem Ausführungsbeispiel der vorliegenden Erfindung.

In **Fig. 1** bezeichnet das Bezugszeichen 1 die unterste Hierarchieebene des semantischen Netzes von Struktureinheiten, bezeichnen die Bezugszeichen 2, 3 und 4 unterschiedliche Hierarchieebenen des hierarchischen semantischen Netzes von Struktureinheiten, bezeichnet das Bezugszeichen 5 ein beispielhaftes Verknüpfungsobjekt vom Typus VSN, bezeichnet das Bezugszeichen 6 ein beispielhaftes Verknüpfungsobjekt vom Typus VSH, bezeichnet das Bezugszeichen 7 beispielhaft ein Datenpunktobjekt, das in diesem Beispiel einen einzelnen Bildpunkt repräsentiert, und bezeichnet das Bezugszeichen 8 beispielhaft Strukturobjekte.

Weiterhin ist in **Fig. 2** die jeweilige Bildinformation in den unterschiedlichen Hierarchieebenen, das heißt in unterschiedlichen Auflösungen, gezeigt, wobei eine einer jeweiligen Hierarchieebene in **Fig. 1** entsprechende Bildinformation in **Fig. 2** mit gleichen Bezugszeichen wie die Hierarchieebene in **Fig. 1** bezeichnet ist.

Wie es bereits zuvor erwähnt worden ist, sind Strukturobjekte 8 jeweils an einen topologischen Bereich der zu bearbeitenden Datenstruktur gebunden und repräsentieren diesen. Jeder einzelne topologische Punkt der zu bearbeitenden Datenstruktur kann durch ein Strukturobjekt 8 oder im hierarchischen Sinne mehrere Strukturobjekte 8 repräsentiert werden. Die Strukturobjekte 8 können bezüglich der Topologie der erfaßten Datenstruktur zusammenhängend sein, müssen dies aber nicht zwingend sein.

Die Strukturobjekte 8 enthalten Daten, die die individuellen Eigenschaften eines jeweiligen Strukturobjekts 8 beschreiben, wie zum Beispiel Größe, Position, Farbwerte usw.

Eine weitere Information über den topologischen Kontext ist in der Auflistung der mit dem Strukturobjekt 8 verbundenen Verknüpfungsobjekte 5 und 6 in dem Informationsinhalt des Strukturobjekts 8 enthalten. Die Auflistung liegt strukturiert nach Unter-Strukturobjekten, Ober-Strukturobjekten, das heißt über ein Verknüpfungsobjekt 6 vom Typus VSH verknüpft, und Nachbar-Strukturobjekten, das heißt über ein Verknüpfungsobjekt 5 vom Typus VSN verknüpft, vor.

Dies ist aus **Fig. 1** ersichtlich. Zum Beispiel sind in der obersten Hierarchieebene 4 des hierarchischen semantischen Netzes von Struktureinheiten zwei Strukturobjekte 8 mit einem Verknüpfungsobjekt 5 vom Typus VSN miteinander verknüpft und sind demgemäß zueinander benachbart. Ferner ist zum Beispiel ein Strukturobjekt 8 in der obersten Hierarchieebene 4 des hierarchischen semantischen Netzes von Struktureinheiten über ein Verknüpfungsobjekt 6 vom Typus VSH mit einem Strukturobjekt 8 in der nächstniedrigeren Hierarchieebene 3 des hierarchischen semantischen Netzes von Struktureinheiten verknüpft, was bedeutet, daß das Strukturobjekt 8 in der obersten Hierarchieebene 4 des hierarchischen semantischen Netzes von Struktureinheiten ein Ober-Strukturobjekt des Strukturobjekts 8 in der nächstniedrigeren Hierarchieebene 3 des hierarchischen Netzes von Struktureinheiten ist und umgekehrt das Strukturobjekt 8 in der nächstniedrigeren Hierarchieebene 3 des hierarchischen semantischen Netzes von Struktureinheiten ein Unter-Strukturobjekt des Strukturobjekts 8 in der obersten Hierarchieebene 3 des hierarchischen Netzes von Struktureinheiten ist. Wie es aus **Fig. 1** ersichtlich ist, sind in einem derartigen hierarchischen semantischen Netz von Struktureinheiten eine Vielzahl derartiger Verknüpfungen anhand der Verknüpfungsobjekte 5 vom Typus VSN und der Verknüpfungsobjekte 6 vom Typus VSH vorhanden.

Ein weiterer Bestandteil von Verknüpfungsobjekten 5, 6 vom Typus VS können ferner Daten sein, die Eigenschaften einer jeweiligen Verknüpfung bezeichnen, wie zum Beispiel die Länge einer gemeinsamen Kante von Nachbar-Strukturobjekten bei einem Verknüpfungsobjekt vom Typus VSN.

Eine Sonderform der Strukturobjekte 8 ist das Datenpunktobjekt 7, das einen einzelnen topologischen Ort einer Datenstruktur, in diesem Fall den Bildpunkt eines Bilds, samt seiner Eigenschaften repräsentiert. Die unterste Ebene des hierarchischen semantischen Netzes 1 von Struktureinheiten besteht also aus Datenpunktobjekten 7. Mittels eines Verknüpfungsobjekts 6 vom Typus VSH kann jedes Datenpunktobjekt einem anderen Strukturobjekt 8 als direktes Unter-Strukturobjekt zugeordnet werden.

Diese Datenpunktobjekte 7 können gleichzeitig Bestandteil einer Datenstruktur sein, die in Übereinstimmung mit den Maßen und der Topologie des vorliegenden Bildmaterials erstellt wird und für jeden einzelnen topologischen Ort einer Datenstruktur, wie zum Beispiel im Fall der Bildverarbeitung ein Pixel oder Voxel, ein Datenpunktobjekt 7 enthält.

Es ist anzumerken, daß bei der zuvor beschriebenen Struktur des hierarchischen Netzes von Struktureinheiten verschiedene Hierarchieebenen 1 bis 4 ausgebildet werden können, wie dies in **Fig. 1** dargestellt ist, und mittels diesen verschiedenen Hierarchieebenen 1 bis 4 der Strukturobjekte 8 der Inhalt der zu bearbeitenden Datenstruktur in unterschiedlichen Auflösungen gleichzeitig repräsentiert werden kann, wie dies in **Fig. 2** dargestellt ist. Dies führt zur Hierarchie des semantischen Netzes in Übereinstimmung mit topologischen Lagebeziehungen der zu bearbeitenden Datenstruktur.

Ein derartiges hierarchisches Netz von Struktureinheiten muß keine einheitliche hierarchische Tiefe, das heißt an jeder Stelle eine gleiche Anzahl von Hierarchieebenen 1 bis 4, aufweisen und es ist nicht immer erforderlich, daß Verknüpfungsobjekte 5 vom Typus VSN im semantischen Netz von Struktureinheiten enthalten sind. Auch ist es nicht immer erforderlich, daß das semantische Netz hierarchisch eindeutig ist. Dies bedeutet, daß es vorkommen kann, daß ein Unter-Strukturobjekt mehrere Ober-Strukturobjekte aufweisen kann.

Es ist jedoch anzumerken, daß ausgenommen der Datenpunktobjekte 7 ein Strukturobjekt 8 immer denjenigen Bereich der zu bearbeitenden Datenstruktur repräsentiert, der sich aus der Gesamtheit aller Bereiche zusammensetzt, die durch die jeweiligen Unter-Strukturobjekte dieses Strukturobjekts 8 repräsentiert werden. In dieser Hinsicht ist das hierarchische semantische Netz von Struktureinheiten eindeutig entsprechend der Topologie der zu bearbeitenden Datenstruktur.

Der zuvor verwendete Begriff der Nachbarschaftlichkeit kann auf unterschiedliche Weise definiert werden.

Ein mögliche Definition ist, daß alle Strukturobjekte 8 auf einer gleichen Hierarchieebene 1 bis 4 in der Hierarchie der Strukturobjekte 8, die mindestens an einer Stelle in einem Raster plan aneinandergrenzen, als benachbart definiert sind.

Eine weitere Möglichkeit ist, daß alle Strukturobjekte auf einer gleichen Hierarchieebene 1 bis 4 in der Hierarchie der Strukturobjekte 8, die mindestens an einer Stelle in einem Raster plan oder diagonal aneinandergrenzen, als benachbart definiert sind.

Hinsichtlich der Definition der Nachbarschaftlichkeit können auch andere Kriterien verwendet werden, die auch dann gelten, wenn Strukturobjekte 8 nicht direkt aneinandergrenzen. Zum Beispiel können im Fall der Bildverarbeitung linienhafte Strukturobjekte einer unterbrochenen Linie als benachbart aufgefaßt werden.

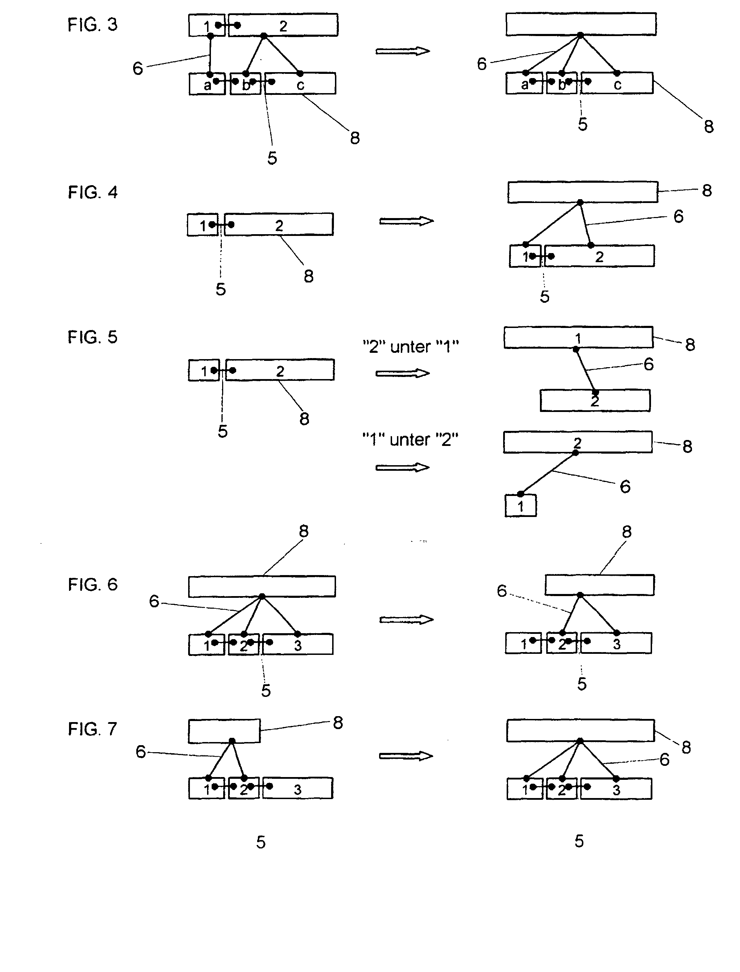

Unter Bezugnahme auf die **Figuren 3 bis 8** werden im weiteren Verlauf lokale Operationen beschrieben, die innerhalb des hierarchischen semantischen Netzes von Struktureinheiten durchgeführt werden können.

**Fig. 3** zeigt eine lokale Operation "Fusion" innerhalb des hierarchischen Netzes von Struktureinheiten anhand eines jeweiligen Netzausschnitts gemäß dem Ausführungsbeispiel der vorliegenden Erfindung.

Bei der lokalen Operation "Fusion" werden zwei oder mehrere bereits vorhandene mit "1" und "2" in der linken Darstellung von **Fig. 3** bezeichnete Strukturobjekte 8 fusioniert bzw. zu einem neuen Strukturobjekt 8 verschmolzen, wie dies aus der rechten Darstellung von **Fig. 3** ersichtlich ist.

**Fig. 4** zeigt eine lokale Operation "Gründen" innerhalb des hierarchischen Netzes von Struktureinheiten anhand eines jeweiligen Netzausschnitts gemäß dem Ausführungsbeispiel der vorliegenden Erfindung.

Bei der lokalen Operation "Gründen" wird für ein oder mehrere in der linken Darstellung von **Fig. 4** mit "1" und "2" bezeichnete Strukturobjekte 8 ein neues Strukturobjekt 8 als Ober-Strukturobjekt erzeugt und mit diesen über Verknüpfungsobjekte 5 vom Typus VSH verknüpft, wie dies aus der rechten Darstellung von **Fig. 4** ersichtlich ist.

**Fig. 5** zeigt eine lokale Operation "Einhängen eines Nachbarn als Unter-Strukturobjekt" innerhalb des hierarchischen Netzes von Struktureinheiten anhand eines jeweiligen Netzausschnitts gemäß dem Ausführungsbeispiel der vorliegenden Erfindung.

Bei der lokalen Operation "Einhängen eines Nachbarn als Unter-Strukturobjekt" wird ein vorhandenes Verknüpfungsobjekt 5 vom Typus VSN zwischen benachbarten Strukturobjekten 8 aufgelöst und ein neues Verknüpfungsobjekt 6 vom Typus VSH zwischen diesen erzeugt, wodurch ein bisheriges Nachbar-Strukturobjekt einem Strukturobjekt 8 als Unter-Strukturobjekt zugeordnet wird und sich in Übereinstimmung damit der dem Strukturobjekt 8 zugehörige Bereich der zu bearbeitenden Datenstruktur vergrößert, wie dies aus **Fig. 5** ersichtlich ist.

**Fig. 6** zeigt eine lokale Operation "Ausgliedern" innerhalb des hierarchischen Netzes von Struktureinheiten anhand eines jeweiligen Netzausschnitts gemäß dem Ausführungsbeispiel der vorliegenden Erfindung.

Bei der lokalen Operation "Ausgliedern" wird ein vorhandenes Verknüpfungsobjekt 6 vom Typus VSH zwischen einem Unter-Strukturobjekt und einem Ober-Strukturobjekt aufgelöst, wodurch das bisherige Unter-Strukturobjekt ausgegliedert wird und sich in Übereinstimmung damit der dem Strukturobjekt 8 zugehörige Bereich der zu bearbeitenden Datenstruktur verkleinert, wie dies aus **Fig. 6** ersichtlich ist.

**Fig. 7** zeigt eine lokale Operation "Einhängen eines neuen Unter-Strukturobjekts" innerhalb des hierarchischen Netzes von Struktureinheiten anhand eines jeweiligen Netzausschnitts gemäß dem Ausführungsbeispiel der vorliegenden Erfindung.

Bei der lokalen Operation "Einhängen eines neuen Unter-Strukturobjekts" wird ein neues Verknüpfungsobjekt 6 vom Typus VSH zwischen einem Strukturobjekt 8 und einem anderen Strukturobjekt 8 erzeugt, welches bisher noch kein Ober-Strukturobjekt dieses Strukturobjekts 8 ist, wodurch dem Ober-Strukturobjekt ein neues Unter-Strukturobjekt zugeordnet wird und sich in Übereinstimmung damit der dem Ober-Strukturobjekt 8 zugehörige Bereich der zu bearbeitenden Datenstruktur vergrößert, wie dies aus **Fig. 7** ersichtlich ist.

Neben den zuvor beschriebenen und in den **Figuren 3 bis 7** gezeigten lokalen Operation sind weiterhin die folgenden lokalen Operationen innerhalb des hierarchischen Netzes von Struktureinheiten durchführbar.

Bei einer lokalen Operation "Teilen" wird ein Strukturobjekt 8 auf der Grundlage seiner Unter-Strukturobjekte in mehrere neue Strukturobjekte 8 geteilt. Dies bedeutet, daß Unter-Strukturobjekte zu zwei oder mehreren Bereichen der zu bearbeitenden Datenstruktur gruppiert werden, die jeweils durch ein neu zu erzeugendes Strukturobjekt 8 auf der gleichen Hierarchieebene des hierarchischen Netzes von Struktureinheiten wie das geteilte Strukturobjekt 8 repräsentiert werden.

Bei einer lokalen Operation "Löschen" wird ein Strukturobjekt gelöscht, wobei seine Unter-Strukturobjekte Unter-Strukturobjekte des bisherigen Ober-Strukturobjekts des gelöschten Strukturobjekts 8 werden können.

Bei einer lokalen Operation "Erzeugen einer Nachbarschaftlichkeit" werden zwei Strukturobjekte 8 auf der gleichen Hierarchieebene des hierarchischen Netzes von Struktureinheiten, die bisher noch nicht über ein Verknüpfungsobjekt 5 vom Typus VSN verknüpft waren, über ein neues Verknüpfungsobjekt 5 vom Typus VSN miteinander verknüpft.

Bei einer lokalen Operation "Löschen einer Nachbarschaftlichkeit" wird ein Verknüpfungsobjekt 5 vom Typus VSN, die zwei Strukturobjekte auf der gleichen Hierarchieebene des hierarchischen Netzes von Struktureinheiten miteinander verknüpft, gelöscht.

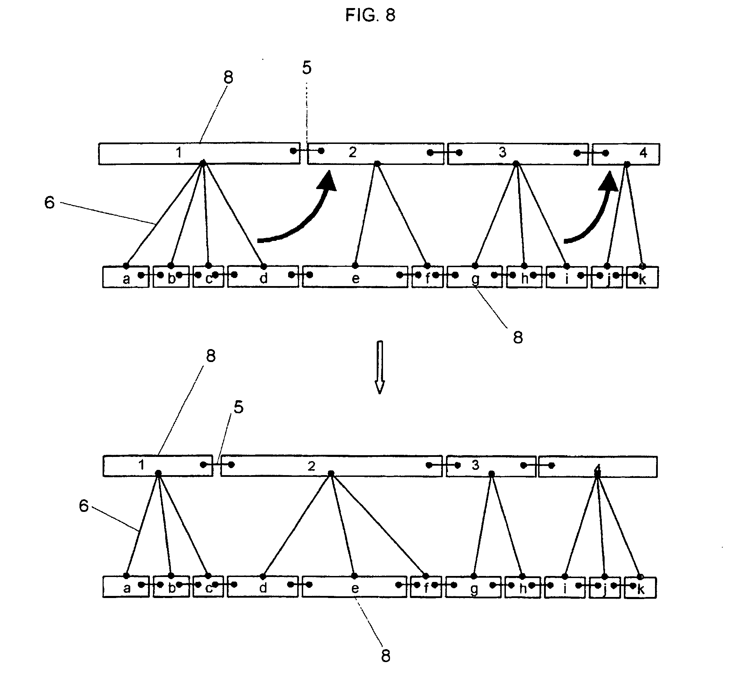

**Fig. 8** zeigt eine spezielle lokale Operation "Randoptimierung" innerhalb des hierarchischen Netzes von Struktureinheiten anhand eines jeweiligen Netzausschnitts gemäß dem Ausführungsbeispiel der vorliegenden Erfindung.

Bei der lokalen Operation "Randoptimierung" werden am Rand liegende Unter-Strukturobjekte eines Strukturobjekts 8 dahingehend analysiert, ob hinsichtlich eines vorbestimmten Kriteriums besser zu einem Nachbar-Strukturobjekt des bisherigen Ober-Strukturobjekts als zu dem bisherigen Ober-Strukturobjekt passen oder nicht. Wenn sie besser zu einem Nachbar-Strukturobjekt passen, wird ein Verknüpfungsobjekt 6 vom Typus VSH zu dem bisherigen Ober-Strukturobjekt dieses am Rand liegenden Unter-Strukturobjekts aufgelöst und ein neues Verknüpfungsobjekt 6 vom Typus VSH zu dem besser passenden Strukturobjekt 8 erzeugt, das nunmehr das neue Ober-Strukturobjekt wird.

In **Fig. 8** wird die Randoptimierung derart durchgeführt, daß mit "1" bis "3" bezeichnete Strukturobjekte randoptimiert werden. Genauer gesagt werden die mit "d" und "i" bezeichneten Strukturobjekte, die Unter-Strukturobjekte der mit "1" bzw. "3" bezeichneten Strukturobjekte 8 sind, derart randoptimiert, das dem mit "d" bezeichneten Strukturobjekt 8 als neues Ober-Strukturobjekt als neues Ober-Strukturobjekt das mit "2" bezeichnete Strukturobjekt 8 zugewiesen wird und dem mit "i" bezeichneten Strukturobjekt 8 das mit "4" bezeichnete Strukturobjekt 8 zugewiesen wird.

Nachstehend erfolgt die Beschreibung des Netzes von semantischen Wissenseinheiten mittels der zuvor beschriebenen Klassenobjekte, Analyseobjekte, Prozessierungsobjekte und deren Verknüpfungen sowie eine Repräsentation der Analyse- und Prozessierungsalgorithmen.

Die in dem Netz von semantischen Wissenseinheiten enthaltenen und zuvor beschriebenen Klassenobjekte weisen drei unterschiedliche Grundfunktionen auf.

Zum einen wirken sie analysierend, was bedeutet, daß mittels von mit einem Klassenobjekt verknüpften Analyseobjekten semantische Einheiten und/oder bestimmte Teilnetze, insbesondere die jeweilige vernetzte Umgebung, analysiert werden. Dies wird insbesondere hinsichtlich einer Zugehörigkeit zu der durch das Klassenobjekt repräsentierten Klasse und mittels des zuvor beschriebenen Verknüpfungsobjekts vom Typus VKA durchgeführt.

Ferner wirken sie zuordnend, was bedeutet, daß semantische Einheiten, vorzugsweise aufgrund einer vorhergehenden Analyse, durch das zuvor beschriebene Verknüpfungsobjekt vom Typus VKZ mit einem Klassenobjekt verknüpft werden und dadurch der durch das Klassenobjekt repräsentierten Klasse zugeordnet werden.

Schließlich wirken sie prozessierend, was bedeutet, daß semantische Einheiten durch das zuvor beschriebene Verknüpfungsobjekt vom Typus VKZ mit einem Klassenobjekt verknüpft werden und ein in einem diesem Klassenobjekt zugehörigen Prozessierungsobjekt enthaltener Prozessierungsalgorithmus über ein Verknüpfungsobjekt vom Typus VKP und das Klassenobjekt auf die semantischen Struktureinheiten und/oder bestimmte Teilnetze angewendet wird.

Es ist anzumerken, daß bei diesem Verfahren nicht nur Struktureinheiten, das heißt Strukturobjekte und/oder deren Verknüpfungen, mittels Klassenobjekten klassifiziert werden. Es besteht ebenso die Möglichkeit, beliebige Arten von semantischen Einheiten zu klassifizieren, wobei dies insbesondere für Verknüpfungsobjekte oder Klassenobjekte gilt. Durch diese Möglichkeit der Klassifikation beliebiger semantischer Einheiten nimmt die Möglichkeit, Inhalte der zu bearbeitenden Datenstruktur zu beschreiben und zu prozessieren erheblich zu.

Klassenobjekte können insbesondere selbst wiederum Bestandteil von Analysealgorithmen eines Merkmalobjekts, zum Beispiel zur Extraktion eines Teilnetzes für eine bestimmte Analyse, oder Bestandteil von Prozessierungsalgorithmen in Prozessierungsobjekten, zum Beispiel zum Durchführen eines bestimmten Schritts, der zusätzliche Analyse erfordert, in dem gesamten, durch das Prozessierungsobjekt beschriebenen Prozeß sein. Dadurch, daß Merkmalobjekte und Prozessierungsobjekte selbst Bestandteile von Klassenobjekten sind, ergibt sich auf diese Weise eine fraktal-hierarchische Struktur von Klassenobjekten in dem Netz von semantischen Wissenseinheiten, was eine entsprechende fraktal-hierarchische Struktur von Analyseund/oder Prozessierungsschritten zur Folge hat.

Wie es zuvor beschrieben worden ist, beinhalten Analyseobjekte Auswertealgorithmen, mittels denen sie mit ihnen verknüpfte semantische Einheiten, und/oder bestimmte Teilnetze analysieren. Analyseobjekte sind im allgemeinen mit einem Klassenobjekt verknüpft und werden auf diejenigen semantischen Einheiten, mit denen sie analysierend verknüpft sind, und/oder bestimmte Teilnetze angewendet.

Der zuvor beschriebene Auswertealgorithmus kann eine Auflistung von Kriterien sein, mittels der ein Grad einer Zugehörigkeit von semantischen Einheiten zu dem mit einem Analyseobjekt verknüpften Klassenobjekt festgestellt wird. Derartige Kriterien werden mittels Merkmalsobjekten definiert, wobei die Merkmalsobjekte über das Verknüpfungsobjekt vom Typus VM mit einem jeweiligen Analyseobjekt verbunden sind.

Jedes Merkmalsobjekt wertet jeweils eines der später beschriebenen Merkmale aus. Die Merkmalsobjekte werden einzeln oder in Gruppen angewendet und die Ergebnisse aller durchgeführten Auswertungen werden über eine Logik bzw. eine logische Verknüpfung miteinander verknüpft.

Diese Logik kann allgemein vorgegeben sein, wie zum Beispiel ein Mitteln der Ergebnisse aller Kriterien, hierarchisch gegliedert sein, für eine jeweilige Gruppe von Merkmalsobjekten spezifisch angegeben werden oder mittels einer Fuzzy-Logik formuliert werden.

Die Verknüpfungsobjekte vom Typus VM können ferner gewichtet sein, wodurch sich aus der Gewichtung dieses Verknüpfungsobjekts vom Typus VM das Maß ergibt, mit dem das jeweilige Merkmalsobjekt bzw. das in diesem beinhaltete Merkmal bei einer Gesamtauswertung berücksichtigt wird.

Die Merkmalsobjekte können mittels in ihnen enthaltenen Klassenobjekten und deren Prozessierungsobjekten virtuelle oder lediglich temporäre Strukturänderungen innerhalb des semantischen Netzes durchführen, um eine sich potentiell an eine jeweilige Klassifikation anschließende Strukturänderung innerhalb des semantischen Netzes in ihrem Ergebnis zu bewerten und folglich die betroffene semantische Einheit entsprechend zu klassifizieren. Mittels der Prozessierungsobjekte können ferner tatsächliche Änderungen durchgeführt werden, die erforderlich sind, um eine lokale Entscheidung hinsichtlich einer Klassifikation durchzuführen. Zum Beispiel können mittels der Prozessierungsobjekte auf diese Weise zum Zwecke einer weiteren Unterscheidung von Strukturobjekten, wie zum Beispiel von Strukturobjekten "Grünland" und "Rasensportplatz", Unter-Strukturobjekte gebildet werden, über deren Klassifikation und Zusammensetzung die eigentlich zu klassifizierenden Strukturobjekte "Grünland" und "Rasensportplatz" dann unterschieden werden.

In Merkmalsobjekten beinhaltete Merkmale, anhand denen auszuwerten ist, können Merkmale sein, die sich auf die Eigenschaft von semantischen Einheiten beziehen, ohne die Analyse anderer semantischen Einheiten oder der Beziehungen zu diesen, wie zum Beispiel im Fall der Bildverarbeitung Farb-, Textur- und/oder Formmerkmale; Merkmale, die sich durch eine Analyse einer Eigenschaft der vernetzten Umgebung einer semantischen Einheit ergeben, zum Beispiel eine Zusammensetzung von Unter-Strukturobjekten anhand einer Klassifikation; Merkmale, die sich durch einen Vergleich einer Eigenschaft einer semantischen Einheit mit einer entsprechenden Eigenschaft ihrer vernetzten Umgebung ergeben, wie zum Beispiel im Fall der Bildverarbeitung der Farbkontrast von einem Strukturobjekt zu einem Ober-Strukturobjekt; und Merkmale, die sich durch einen Vergleich einer Eigenschaft einer semantischen Einheit mit einer entsprechenden Eigenschaft eines bestimmten Teilnetzes ergeben, wie zum Beispiel im Fall der Bildverarbeitung die Entfernung eines Strukturobjekts zu dem nächsten Strukturobjekt einer bestimmten Klassifikation. Es kann aber zum Beispiel auch eine Passung eines Strukturobjekts auf eine vorbestimmte Schablone oder andere Analysen sein.

Ferner können sich in Merkmalsobjekten enthaltene Merkmale aus einer Analyse der Klassifikation von semantischen Einheiten eines bestimmten Teilnetzes ergeben. Beispiele dafür sind eine relative Gesamtfläche der einer bestimmten Klasse zugeordneten Strukturobjekte innerhalb einer bestimmten vernetzten Umgebung, oder die Differenz einer Eigenschaft von zu einer bestimmten Klasse zugeordneten Strukturobjekten innerhalb eines gemeinsamen Ober-Strukturobjekts und vieles andere mehr.

Wie es zuvor beschrieben worden ist, werden zur Beschreibung und Auswertung von einzelnen Merkmalen bzw. Attributen die Merkmalsobjekte verwendet.

Die in ihnen beinhalteten Auswertealgorithmen können von unterschiedlicher Art sein, wie zum Beispiel Fuzzy-Zugehörigkeitsfunktionen, Klassifikatoren, die anhand von bestimmten "Trainingsobjekten" mittels eines Nearest-Neighbour-Verfahrens auswerten, neuronale Netze, statistische Analysen oder Formschablonen, mittels denen zu klassifizierende oder zu optimierende semantische Einheiten oder Teilnetze von semantischen Einheiten verglichen werden.

Merkmalsobjekte können sowohl mit Analyseobjekten als auch mit Prozessierungsobjekten über das Verknüpfungsobjekt vom Typus VM verknüpft sein und werden von diesen auf die jeweiligen zu behandelnden semantischen Einheiten und/oder bestimmte Teilnetze angewendet.

Wie es zuvor beschrieben worden ist, beinhalten Prozessierungsobjekte Prozessierungsalgorithmen, mittels denen sie die mit ihnen direkt oder indirekt über ein Klassenobjekt verknüpften semantischen Einheiten und/oder bestimmte Teilnetze verändern. Derartige Veränderungen sind insbesondere alle lokalen Operationen, wie sie bereits hinsichtlich des hierarchischen Netzes von Struktureinheiten beschrieben worden sind, wobei anstelle der Strukturobjekte und deren Verknüpfungen allgemein alle Arten von semantischen Einheiten und deren Verknüpfungen mittels der lokalen Operationen prozessiert werden können, was bedeutet, daß insbesondere semantische Einheiten gelöscht, erzeugt, verändert, oder mit bereits bestehenden semantischen Einheiten im hierarchischen semantischen Netz verknüpft werden können.

Um eine Prozessierung zu unterstützen, können Prozessierungsobjekte mittels Klassenobjekten, die mit ihnen verknüpft sind, auch während einer Prozessierung Teilschritte durchführen, die eine zusätzliche Analyse erfordern.

Ferner können zum Zwecke der Strukturierung und der Komplexitätsreduktion von "Weltwissen" Klassenobjekte untereinander über unterschiedliche Verknüpfungsobjekte verknüpft sein.

Hierbei handelt es sich um die zuvor beschriebenen Verknüpfungsobjekte vom Typus VÄ mit den untergeordneten Verknüpfungsobjekten der Typen VÄH, VÄHA und VÄHJ, VÄN, VÄNA und VÄNJ, Verknüpfungsobjekte vom Typus VG mit den untergeordneten Verknüpfungsobjekten der Typen VGH und VGN sowie die Verknüpfungsobjekte vom Typus VÄG mit den untergeordneten Verknüpfungsobjekten der Typen VÄGH, VÄGHA, VÄGHJ und VÄGN.

Hierbei erzeugen das Verknüpfungsobjekt vom Typus VG und dessen untergeordnete Verknüpfungsobjekte der Typen VGH und VGN, die eine gruppierende Verknüpfung darstellen, eine Beziehung mit der Bedeutung nach oben innerhalb der hierarchischen Struktur "ist (semantisch) im allgemeinen" und nach unten innerhalb der hierarchischen Struktur "ist (semantisch) im speziellen". Dieses Verknüpfungsobjekt vom Typus VG und dessen untergeordnete Verknüpfungsobjekte der Typen VGH, VGH und VGN werden zur Gruppierung von Klassenobjekten verwendet und erleichtern eine Definition von Beziehungen zwischen unterschiedlichen Klassen. Allgemein ausgedrückt erzeugen sie eine "Gruppierungshierarchie".

Ferner erzeugen das Verknüpfungsobjekt vom Typus VÄ und dessen untergeordnete Verknüpfungsobjekte der Typen VÄH, VÄHA und VÄHJ, VÄN, VÄNA und VÄNJ, die eine Ähnlichkeitsverknüpfung darstellen, eine Beziehung mit der Bedeutung nach oben innerhalb der hierarchischen Struktur "ist ähnlich im allgemeinen" und nach unten innerhalb der hierarchischen Struktur "ist ähnlich im speziellen". Hierbei findet eine Vererbung von Verknüpfungen zu Analyseobjekten und/oder Prozessierungsobjekten von Ober-Klassenobjekten zu Unter-Klassenobjekten statt. Allgemein ausgedrückt erzeugen sie eine "Ähnlichkeitshierarchie".

Die Vorgänge der Vererbung und Gruppierung können mittels des Verknüpfungsobjekts vom Typus VÄ und dessen untergeordneten Verknüpfungsobjekten der Typen VÄH, VÄHA und VÄHJ, VÄN, VÄNA und VÄNJ bzw. mittels des Verknüpfungsobjekts vom Typus VG und dessen untergeordneten Verknüpfungsobjekten der Typen VGH und VGN voneinander getrennt durchgeführt.

Es besteht jedoch auch die Möglichkeit, die Vorgänge der Vererbung und Gruppierung gemeinsam durchzuführen, was mittels des Verknüpfungsobjekts vom Typus VÄG und dessen untergeordneten Verknüpfungsobjekten der Typen VÄGH, VÄGHA, VÄGHJ und VÄGN durchgeführt wird, die sowohl Gruppierungs- als auch Vererbungseigenschaften aufweisen.

Die derart erzielten Hierarchien der Klassenobjekte sind entweder eindeutig, was bedeutet, das jedes Klassenobjekt maximal ein Ober-Klassenobjekt aufweist, oder sind nicht eindeutig, was bedeutet, daß jedes Klassenobjekt mehrere Ober-Klassenobjekte aufweisen kann, und was zu einer Mehrfach-Vererbung (Ähnlichkeitshierarchie) bzw. zu einer mehrfachen semantischen Zugehörigkeit (Gruppierungshierarchie) führt.

Ferner führen die zuvor beschriebenen Verknüpfungsobjekte zu einer speziellen hierarchischen Gliederung des Netzes aus Klassenobjekten. Durch diese Gliederung ist insbesondere die Formulierung von komplexeren Semantiken zur Prozessierung von Inhalten der zu bearbeitenden Datenstruktur möglich.

Nachstehend erfolgt die Beschreibung, auf welche Weise eine Klassifikation von semantischen Struktureinheiten durchgeführt wird.

Die zu klassifizierenden Strukturobjekte bzw. allgemein semantischen Einheiten werden zunächst über Verknüpfungsobjekte vom Typus VKA mit jeweils allen in Frage kommenden Klassenobjekten verknüpft.

Hierbei sind zwei unterschiedliche Strategien zum Durchführen der Klassifikation möglich.

Die erste Strategie besteht darin, daß alle Klassenobjekte für eine Analyse von jeweils zu analysierenden semantischen Einheiten in Frage kommen, die sich auf der untersten Hierarchieebene einer mittels Verknüpfungsobjekten vom Typus VÄHA erzielten Ähnlichkeitshierarchie eines Netzes von Klassenobjekten befinden oder explizit als in Frage kommend gekennzeichnet sind. Die jeweils zu analysierenden semantischen Einheiten werden mittels Verknüpfungsobjekten vom Typus VKA mit diesen Klassenobjekten zwecks einer Analyse verknüpft. Im Anschluß werden die analysierten semantischen Einheiten mittels Verknüpfungsobjekten vom Typus VKZ zuordnend mit einem oder mehreren Klassenobjekten verbunden, bei deren Merkmalsauswertung sich eine Zugehörigkeit oder die höchste Zugehörigkeit zu der durch ein jeweiliges Klassenobjekt repräsentierten Klasse ergibt.

Die zweite Strategie besteht darin, daß alle Klassenobjekte in Frage kommen, die ausgehend von den Klassenobjekten auf der obersten Hierarchieebene einer mittels Verknüpfungsobjekten vom Typus VÄHA erzielten Ähnlichkeitshierarchie im Netz von Klassenobjekten entlang eines hierarchischen Entscheidungspfads in der Ähnlichkeitshierarchie angelaufen werden. Dieser Entscheidungspfad wird jeweils bei einem derartigen Klassenobjekt in einer jeweiligen Hierarchieebene der Ähnlichkeitshierarchie weitergeführt, zu welchem eine jeweilige zu analysierende semantische Einheit die höchste Zugehörigkeit aufweist. Die nächsten auszuwertenden Klassenobjekte sind dann alle Klassenobjekte, die von dem Klassenobjekt höchster Zugehörigkeit mittels Verknüpfungsobjekten vom Typus VÄHA nach unten in der Ähnlichkeitshierarchie verknüpft sind. Auf diesem Entscheidungspfad wird eine jeweils zu analysierende semantische Einheit zuordnend mittels eines Verknüpfungsobjekts vom Typus VKZ mit dem Klassenobjekt verknüpft, von dem aus es keine weiteren Verknüpfungsobjekte vom Typus VÄHA nach unten in der Ähnlichkeitshierarchie mehr gibt.

Verknüpfungsobjekte vom Typus VKA wenden die bei dem mit einem jeweiligen Klassenobjekt (möglicherweise geerbt) verknüpften Analyseobjekt vorgesehenen Merkmalsobjekte und deren logische Verknüpfungen untereinander an.

Nachstehend erfolgt die Beschreibung, auf welche Weise eine lokale Prozessierung durchgeführt wird.

Wenn eine semantische Einheit über ein Verknüpfungsobjekt vom Typus VKZ mit einem Klassenobjekt verknüpft ist, wobei dieses Klassenobjekt gleichzeitig mit einem oder mehreren Prozessierungsobjekten verknüpft ist, kann ein Verknüpfungsobjekt vom Typus VKP zwischen der semantischen Einheit und dem Klassenobjekt erzeugt werden, wobei über dieses Verknüpfungsobjekt vom Typus VKP der in dem Prozessierungsobjekt oder den Prozessierungsobjekten enthaltene Prozessierungsalgorithmus auf die semantische Einheit und/oder bestimmte Teilnetze angewendet wird.

Der zeitliche Steuerablauf, wann dies jeweils erfolgt, kann global für alle Klassenobjekte mit einer Verknüpfung zu einem Prozessierungsobjekt vorgegeben werden, global für spezifische Klassenobjekte mit einer Verknüpfung zu einem Prozessierungsobjekt vorgegeben werden oder ein weiterer Bestandteil eines spezifischen Prozessierungsobjekts sein.

Bezüglich der möglichen Veränderungen innerhalb des hierarchischen Netzes sei auf die vorhergehenden Ausführungen hinsichtlich der Prozessierungsobjekte verwiesen.

Nachstehend erfolgt die Beschreibung einer Clusteranalyse von semantischen Struktureinheiten.

Mittels eines gebräuchlichen Verfahrens, der Clusteranalyse, können semantische Struktureinheiten in einem vorgegebenen Merkmalsraum zu Gruppen von semantischen Struktureinheiten mit ähnlichen Eigenschaften für eine weitere Verarbeitung zusammengefaßt werden.

Klassenobjekte können zusammen mit den zu ihnen gehörenden Merkmalsobjekten derart automatisch erzeugt werden, daß sie jeweils ein Cluster von ähnlichen semantischen Struktureinheiten in einem vorgegebenen Merkmalsraum beschreiben.

Nachstehend erfolgt die Beschreibung einer Ergänzung einer nicht direkt im erfaßten Datenmaterial enthaltenen Information.

Eine für viele Anwendungen wichtige Möglichkeit ist die Ergänzung von Information, die nicht direkt in der erfaßten Datenstruktur vorhanden ist. Dies ist durch Strukturobjekte möglich, die keinen Bereich der Datenstruktur repräsentieren und durch entsprechende Analyseund Prozessierungsvorschriften erzeugt werden.

Im folgenden wird ein Fallbeispiel aus der Bildanalyse erläutert. In einem zweidimensionalen Bildmaterial ist eine dreidimensionale Situation mit einem Tisch wiedergegeben. Zwei Stuhlbeine dieses Tischs sind teilweise durch die Tischplatte verdeckt. In einem ersten Prozeß der Objektextraktion werden Strukturobjekte erzeugt, die jeweils einen homogenen Bereich des Bildmateriales wiedergeben. Diese Strukturobjekte werden klassifiziert. Als Ergebnis liegen unter anderem ein Strukturobjekt, das als Tischplatte klassifziert ist, und zwei Strukturobjekte vor, die dem Klassenobjekt "unvollständiges Tischbein" zugeordnet sind. Mit dem Klassenobjekt "unvollständiges Tischbein" ist ein Prozessierungsobjekt verknüpft, das eine Prozessierungsvorschrift zum Erzeugen von Strukturobjekten enthält, die ein unvollständiges Tischbein unter Berücksichtigung weiterer Information (zum Beispiel Ausdehnung der Tischplatte) ergänzen. Als Ergebnis wird für jedes Strukturobjekt der Klasse "unvollständige Tischbein" ein neues, benachbartes Strukturobjekt erzeugt, das keinen Bereich des Bildmaterials repräsentiert und der Klasse "verdecktes Tischbein" zugeordnet ist. Für jedes Paar Strukturobjekte "unvollständiges Tischbein" und "verdecktes Tischbein" wird ein neues, den beiden Strukturobjekten übergeordnetes Strukturobjekt gegründet, das der Klasse "Tischbein" zugeordnet wird. Auf diese Weise wird eine nicht direkt in der Datenstruktur enthaltene Information, das heißt der verdeckte Teil des Tischbeins, ergänzt. Auf ähnliche Weise können andere nicht direkt in der Datenstruktur enthaltene Informationen ergänzt werden und kann derart in Form eines Netzes von klassifizierten Strukturobjekten eine durch das Bildmaterial nur angedeutete Szenerie erzeugt werden.

Auch durch Übertragung von Attributen von einem Klassenobjekt auf mit ihm zugehörig verknüpften semantischen Einheiten kann eine Ergänzung von nicht direkt in der erfaßten Datenstruktur enthaltenen Informationen geschehen. So kann im zuvor beschriebenen Beispiel das Attribut "massiv" von der Klasse "Tischbein" auf das entsprechende zuordnend verknüpfte Strukturobjekt übertragen werden.

Nachstehend erfolgt die Beschreibung eines Prozessierungsergebnisses am Beispiel einer Bildanalyse/verarbeitung:

Als Ergebnis einer Bildanalyse bzw. -prozessierung bzw. -verarbeitung liegt ein hierarchisches Netz von semantischen Struktureinheiten vor, in dem jedes Strukturobjekt über Verknüpfungsobjekte vom Typus VS mit anderen Strukturobjekten seiner topologischen Umgebung verknüpft ist und über Verknüpfungsobjekte vom Typus VKZ keiner, einer oder mehreren Klassenobjekten bzw. der durch diese repräsentierten Klasse zugeordnet worden ist.

Ausgehend von derartigen Klassenobjekten ist entlang einer Bedeutungshierarchie mittels Verknüpfungsobjekten vom Typus VG weitere Information für jedes einer Klasse zugeordnete Strukturobjekt enthalten, wie zum Beispiel eine allgemeinere Klassifikation über Verknüpfungsobjekte vom Typus VGH nach oben in der Hierarchie oder andere Klassen ähnlicher Bedeutung über Verknüpfungsobjekte vom Typus VGN.

Für jedes Klassenobjekt können alle semantischen Einheiten, die diesem Klassenobjekt bzw. der durch diesen repräsentierten Klasse zugeordnet worden sind, durch eine Verknüpfung mittels eines Verknüpfungsobjekts vom Typus VKZ abgerufen werden.

Entlang der vielfältigen Verknüpfungen der semantischen Einheiten kann eine Navigation durch das semantische Netz durchgeführt werden, wobei eine interessante Detailinformation über das analysierte bzw. prozessierte Bild abrufbar ist.

Das gesamte sich ergebende semantische Netz und damit die in ihm repräsentierte Information bezüglich von Bildinhalten kann gespeichert und wieder neu geladen werden.

Ein wesentlicher Vorteil besteht ferner darin, daß durch Herausnehmen aller Datenpunktobjekte aus einem Netz von Struktureinheiten nach einer erfolgten Prozessierung einer erfaßten Datenstruktur eine starke Reduktion der Gesamtinformation möglich ist, ohne daß die durch die erzeugte sinnvolle Verschränkung des Netzes von Struktureinheiten und des Netzes von Wissenseinheiten repräsentierte und durch die Prozessierung gewonnene neue Information eingeschränkt werden muß. Dadurch eignet sich das Verfahren insbesondere zur Kompression von Datenstrukturen bzw. zur Anlage von Datenbanken.

Zur Verdeutlichung der vorhergehenden Ausführungen werden nachfolgend einige veranschaulichenden Beispiele beschrieben.

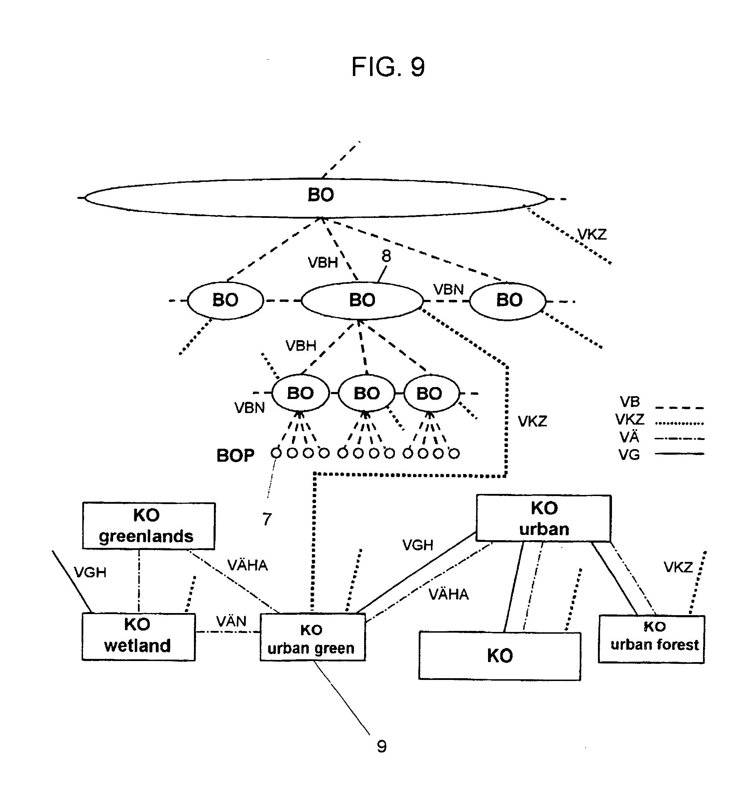

**Fig. 9** zeigt ein Beispiel einer vernetzten Umgebung eines klassifizierten Strukturobjekts 8 und eines entsprechenden Klassenobjekts 9 in schematischer Darstellung. In dieser Figur sind jeweilige Verknüpfungsobjekte zwischen semantischen Einheiten symbolisch als diese semantischen Einheiten verbindende Linien dargestellt.

Das klassifizierte Strukturobjekt 8 ist über ein zuordnendes Verknüpfungsobjekt vom Typus VKZ mit dem Klassenobjekt 9 verknüpft. Ferner ist das klassifizierte Strukturobjekt 8 über hierarchische und nachbarschaftliche Verknüpfungsobjekte vom Typus VS mit anderen in der Figur mit "SO" bezeichneten Strukturobjekten verknüpft. Über seine Unter-Strukturobjekte ist das klassifizierte Strukturobjekt 8 indirekt mit den in der Figur mit "DPO" bezeichneten Datenpunktobjekten 7 und damit dem Bildbereich verknüpft, den es repräsentiert. Wie es aus der Figur ersichtlich ist, repräsentiert das klassifizierte Strukturobjekt 8, das mit dem Klassenobjekt 9 verknüpft ist, die Klasse "urban green". Über Verknüpfungsobjekte vom Typus VÄHA, mit denen ebenso Verknüpfungen zu Analyseobjekten und damit Merkmalsbeschreibungen vererbt werden können, ist das Klassenobjekt 9 mit anderen in der Figur mit "KO" bezeichneten Klassenobjekten verknüpft, welche die Klassen "greenlands" und "urban" repräsentieren, und erbt von diesen die jeweiligen Merkmalsbeschreibungen, wie zum Beispiel Farbeigenschaften der Klasse "greenlands" und die Eigenschaft, stark von anderen städtischen Flächen umgeben zu sein, von der Klasse "urban". Dadurch kann das Klassenobjekt 9 bzw. die durch sie repräsentierte Klasse "urban green" als ähnlich zu den Klassenobjekten bzw. zu den durch sie repräsentierten Klassen "greenlands" und "urban" bezeichnet werden. Ferner ist das Klassenobjekt "urban green" über ein Verknüpfungsobjekt vom Typus VGH als untergeordnetes Klassenobjekt dem Klassenobjekt "urban" semantisch zugeordnet. Damit ist festgelegt, daß das Klassenobjekt "urban green" semantisch im allgemeinen als Klassenobjekt "urban" aufzufassen ist.

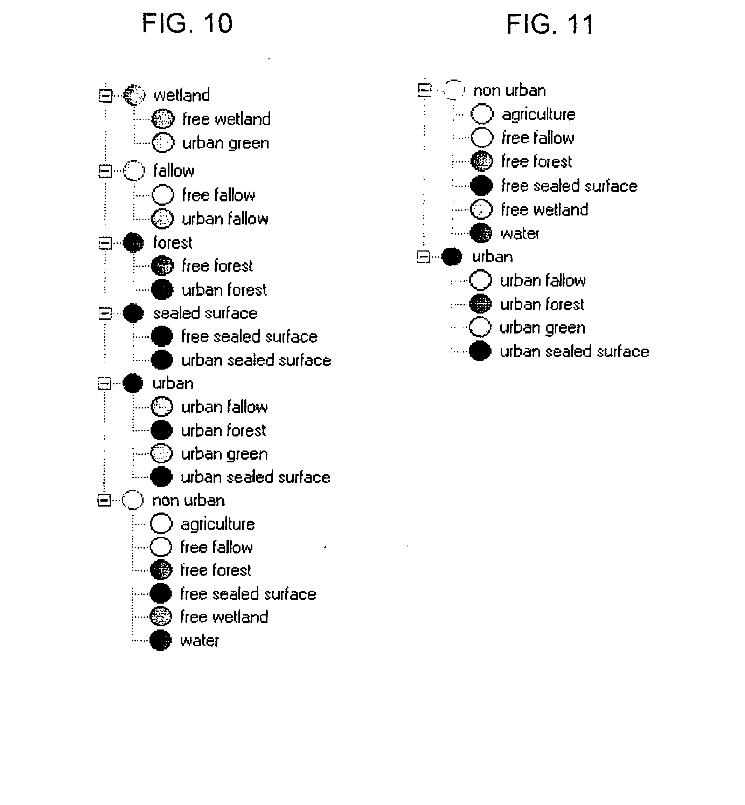

**Fig. 10** zeigt ein Beispiel einer Anordnung von Klassenobjekten in einer Vererbungshierarchie gemäß der Darstellung in **Fig. 9**.

Aus dieser Figur ist es ersichtlich, daß die Klasse "urban" zweimal als untergeordnete Klasse der Klassen "urban" und "greenlands" auftritt.

**Fig. 11** zeigt ein Beispiel einer Anordnung der Klassenobjekte von **Fig. 10** in einer Gruppierungshierarchie.

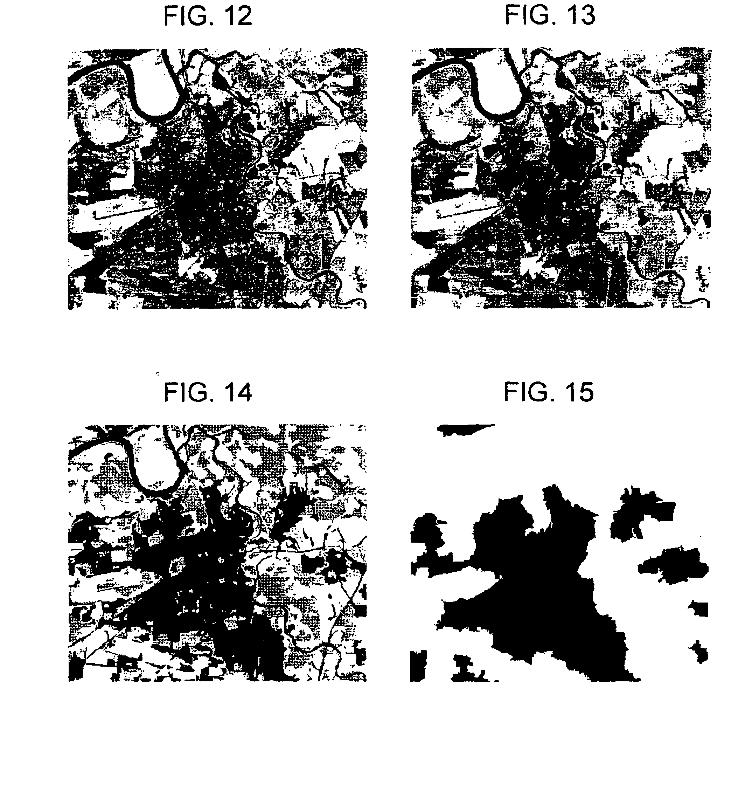

**Fig. 12** zeigt eine Darstellung eines Original-Ausschnitts aus einem Satellitenbild.

**Fig. 13** zeigt eine Darstellung der Strukturobjekte in dem gleichen Bildausschnitt wie in **Fig. 12**.

**Fig. 14** zeigt eine Darstellung, in der gleiche Strukturobjekte gemäß der Gruppierungshierarchie in **Fig. 11** in der Farbe des jeweils mit ihnen verknüpften Klassenobjekts eingefärbt sind, in dem gleichen Bildausschnitt wie in **Fig. 12**.

**Fig. 15** zeigt eine Darstellung, in der gleiche Strukturobjekte gemäß der Gruppierungshierarchie in **Fig. 11** in der Farbe der in der Gruppierungshierarchie nächsthöheren Klassenobjekte eingefärbt sind, in dem gleichen Bildausschnitt wie in **Fig. 12.**

Nachstehend erfolgt die Beschreibung eines Fallbeispiels für die Bildverarbeitung, wobei die **Figuren 10** bis 15 detaillierter erläutert werden.

Es sei angenommen, daß die Aufgabenstellung darin besteht, auf der Grundlage von Satellitenbildern Strukturobjekte zu extrahieren, die vollständige, zusammenhängende Flächen von Landnutzungskategorien bzw. Klassen "urban" und "non urban" repräsentieren.

Wie es aus **Fig. 12** ersichtlich ist, sind versiegelte Flächen aufgrund ihrer spektralen Eigenschaften gut von anderen Flächen unterscheidbar. Dennoch sind Flächen der Klassen "urban" und "non urban" jeweils spektral sehr heterogene Flächen. Städtische Bereiche enthalten sehr viele nicht versiegelte Flächen, während zum Beispiel Überlandstraßen versiegelt sind, aber in die Klasse "non urban" einzuordnen sind. Die Extraktion der Landnutzungskategorien bzw. Klassen "urban" und "non urban" stellt daher ein wesentliches Problem dar, bei dem zur Klassifikation von Strukturobjekten auch eine lokale Kontextinformation verwendet werden muß, um eine Einbettung nicht versiegelter Flächen in urbane Umgebung und die Einbettung von versiegelten Flächen in nicht urbane Umgebung zu beschreiben. Dies wird nachstehend detaillierter erläutert.

Auf einer obersten Ebene im hierarchischen Netz von Wissenseinheiten befindet sich ein Klassenobjekt "Bildanalyse urban/non urban". Dieses beinhaltet ein Prozessierungsobjekt bzw. ist mit einem Prozessierungsobjekt verknüpft, das die folgende, jeweils auf Teilnetze von semantischen Wissenseinheiten zurückgreifende Ablaufsteuerung beinhaltet.

Als erstes wird für jeden Bildpunkt der erfaßten Bildinformation, das heißt des Satellitenbilds, ein Datenpunktobjekt erzeugt. Dann werden die Datenpunktobjekte entsprechend der Topologie des Bilds vernetzt. Diese Datenpunktobjekte stellen die unterste Ebene des hierarchischen Netzes von Strukturobjekten dar.

Anschließend erfolgt eine Segmentierung von Strukturobjekten.

Dabei wird mittels der lokalen Operation "Gründen", wie sie unter Bezugnahme auf **Fig. 4** beschrieben worden ist, ein zunächst aus einem einzigen Pixel bzw. Bildelement bestehendes Strukturobjekt erzeugt, was bedeutet, daß Strukturobjekte erzeugt werden und als Ober-Strukturobjekte hierarchisch über ein Verknüpfungsobjekt vom Typus VSH mit einem jeweiligen Datenpunktobjekt vernetzt werden. Die Strukturobjekte sind über Verknüpfungsobjekte vom Typus VSN nachbarschaftlich miteinander vernetzt.

In nachfolgend ausgeführten vielfachen iterativen Schritten werden diese nachbarschaftlichen Verknüpfungsobjekte vom Typus VSN mit einer Klasse "Niedrigste Heterogenitätszunahme bei Fusion innerhalb einer bestimmten Schranke" analysiert. Zu diesem Zweck wird ein entsprechendes Klassenobjekt über eine analysierende Klassenverknüpfung mittels des Verknüpfungsobjekts vom Typus VKA mit jeweiligen Verknüpfungsobjekten vom Typus VSN verknüpft. Diejenigen Verknüpfungsobjekte vom Typus VSN, die einen Auswertealgorithmus erfüllen, der in einem dem Klassenobjekt zugehörigen Analyseobjekt enthalten ist, werden mittels eines Verknüpfungsobjekts vom Typus VKZ zuordnend mit dem Klassenobjekt verknüpft.

Das Klassenobjekt "niedrigste Heterogenitätszunahme bei Fusion innerhalb einer bestimmten Schranke" ist gleichzeitig mit einem Prozessierungsobjekt verknüpft, daß den Algorithmus "Fusioniere direkt nach einer zuordnenden Klassifizierung, die durch das zuordnend klassifizierte Verknüpfungsobjekt verknüpften Strukturobjekte" enthält. Diese lokale Operation "Fusion" von Strukturobjekten ist vorstehend unter Bezugnahme auf **Fig. 3** beschrieben worden. Demgemäß werden diejenigen Strukturobjekte, die über ein derart zuordnend klassifiziertes Verknüpfungsobjekt vom Typus VSN verbunden sind, zu einem entsprechend größeren Strukturobjekt fusioniert und werden die Verknüpfungsobjekte vom Typus VSN zu anderen benachbarten Strukturobjekten entsprechend aktualisiert.

Dieser Vorgang wird solange über das hierarchische Netz von semantischen Struktureinheiten ausgeführt, bis es keine Verknüpfungsobjekte vom Typus VSN mehr gibt, welche den Auswertealgorithmus erfüllen, der in dem dem Klassenobjekt zugehörigen Analyseobjekt enthalten ist.

Wie es in **Fig. 13** gezeigt ist, sind das Ergebnis einer derartigen Segmentierung homogene Strukturobjekte einer ungefähr einheitlichen Auflösung. Es ist also ein hierarchisches Netz von Strukturobjekten mit Datenpunktobjekten auf der unteren Ebene und Strukturobjekten auf der oberen Ebene erzeugt worden.

Als nächstes erfolgt die Klassifikation der Strukturobjekte.

In dem Netz von semantischen Wissenseinheiten ist ein Teilnetz mit Klassenobjekten enthalten, die in dem mit ihnen jeweils verknüpften Analyseobjekt Merkmalsobjekte mit Merkmalsbeschreibungen für die in dem Bild vorkommenden typischen Landbedeckungstypen enthalten, wie zum Beispiel "wetland", "forest", "agriculture", "water", "sealed surface" und "fallow" (siehe **Fig. 10**). Weiterhin gibt es zwei Klassenobjekte "urban" und "non urban" (siehe **Fig. 11**), die in dem mit ihnen jeweils verknüpften Analyseobjekt Merkmalsobjekte mit Merkmalsbeschreibungen bezüglich der Einbettung in eine urbane Umgebung enthalten (siehe **Fig. 10**).

Diese Merkmalsbeschreibungen greifen ihrerseits auf ein Klassenobjekt "Nachbar-Strukturobjekt in einer bestimmten Entfernung" zu. Für eine Merkmalsauswertung werden alle Strukturobjekte, die diesem Klassenobjekt zugeordnet werden, daraufhin analysiert, ob sie direkt oder indirekt der Klasse "urban" zugeordnet sind. Zum Beispiel kann die Eigenschaft "relative Fläche der Klasse "urban" in der bestimmten Umgebung" als Merkmal ausgewertet werden.

Andere Klassenobjekte in **Fig. 10** sind hierarchisch über eine vererbende Verknüpfung mittels des Verknüpfungsobjekts vom Typus VÄH mit den zuvor genannten Klassenobjekten verknüpft und erben jeweils die Verknüpfung zu den in einer jeweiligen Objektklasse enthaltenen Analyseobjekten. Auf diese Weise erbt zum Beispiel das Klassenobjekt "urban green" von dem Klassenobjekt "wetland" die Merkmalsbeschreibung, so auszusehen wie "wetland", und von dem Klassenobjekt "urban" die Merkmalsbeschreibung, hoch eingebettet in urbane Umgebung zu sein (siehe **Fig. 10**).

Die gleichen Klassenobjekte sind über semantische Verknüpfungsobjekte vom Typus VGH zu semantisch sinnvollen Gruppen verknüpft. Alle Klassenobjekte, die eine städtische Landnutzungsklasse repräsentieren, sind als Unter-Klassenobjekte mit dem Klassenobjekt "urban" verknüpft und alle Klassenobjekte, die Freiland-Klassen repräsentieren, sind mit dem Klassenobjekt "non-urban" verknüpft (siehe **Fig. 11**).

Die eigentliche Klassifikation der Strukturobjekte wird durchgeführt, indem jedes der erzeugten Strukturobjekte mit allen Klassenobjekten auf der untersten Ebene der Ähnlichkeitshierachie analysierend verknüpft wird. Jedes Strukturobjekt wird mit demjenigen Klassenobjekt zuordnend verknüpft, bezüglich dessen Merkmalsauswertung es die besten Ergebnisse gab, solange diese über einem Mindestschwellwert liegen.

Das Ergebnis der Klassifikation ist die zuordnende Verknüpfung der Strukturobjekte mit einem Klassenobjekt (**Fig. 14**). Strukturobjekte, die zum Beispiel städtische Grünflächen repräsentieren, sind aufgrund der Einbettung in urbane Umgebung mit dem Klassenobjekt "urban green" verknüpft. Durch die Verknüpfung der Klassenobjekte in der semantischen Hierarchie sind diese Strukturobjekte damit auch indirekt mit dem Klassenobjekt "urban" verknüpft **(Fig. 15**).

Als nächstes erfolgt die Segmentierung von "urban"und "non urban"-Strukturobjekten.

Das Ziel ist die Extraktion von vollständigen zusammenhängenden "urban"- bzw. "non urban"-Flächen. Dazu wird eine neue Ebene von Strukturobjekten als Ober-Strukturobjekte der bisher extrahierten und klassifizierten Strukturobjekte mittels der lokalen Operation "Gründen" (**Fig. 4**) derart erzeugt, daß die neuen Ober-Strukturobjekte jeweils vollständig alle benachbarten Strukturobjekte als Unter-Strukturobjekte beinhalten, die entweder der Klasse "urban" oder der Klasse "non urban" zugeordnet sind. Das Ergebnis sind Ober-Strukturobjekte auf einer neuen obersten Ebene, die jeweils eine Fläche mit einer einheitlichen "urban" oder "non urban"-Landnutzung repräsentieren.

Anschließend erfolgt die Klassifikation von "urban whole"- und "non urban whole"-Strukturobjekten auf der obersten Ebene.

Die zuletzt extrahierten Strukturobjekte werden mit einem Teilnetz von semantischen Wissenseinheiten klassifiziert, das die Klassenobjekte "urban whole" und "non urban whole" beinhaltet. Wiederum werden die Strukturobjekte zuordnend mit demjenigen Klassenobjekt verknüpft, zu dessen Merkmalsbeschreibung sie am besten passen. Als Merkmal kann hierfür zum Beispiel eine zuordnende Klassenverknüpfung mittels des Verknüpfungsobjekts vom Typus VKZ der Unter-Strukturobjekte berücksichtigt werden.

Das Ergebnis der zuvor beschriebenen Gesamtanalyse ist eine hierarchische Struktur von Strukturobjekten mit Datenpunktobjekten auf der untersten Ebene, mit den zunächst extrahierten und klassifizierten Strukturobjekten auf der nächsten Ebene und mit den zuletzt extrahierten und klassifizierten Strukturobjekten auf der obersten Ebene. Auf diese Weise ist die Bildinformation sowohl topologisch als auch semantisch über Strukturobjekte in unterschiedlichen Auflösungen gleichzeitig wiedergegeben (zum Beispiel Datenpunktobjekt, Strukturobjekt der Klasse "urban green", Strukturobjekt der Klasse "urban whole"). Die Klassifikationen, die bezüglich eines bestimmten Bildelements gelten, können durch Vernetzung ausgehend von dem entsprechenden Datenpunktobjekt über das hierarchische Verknüpfungsobjekt vom Typus VSH zu Strukturobjekten, deren Verknüpfungen zu Klassenobjekten mittels des Verknüpfungsobjekts vom Typus VKZ und schließlich den Verknüpfungen entlang der Gruppierungshierachie der Klassenobjekte mittels des Verknüpfungsobjekts vom Typus VG abgefragt werden.

Wie es bereits zuvor erläutert worden ist, ist die vorliegende Erfindung nicht auf den Anwendungsfall der Bildverarbeitung beschränkt, sondern kann überall dort angewendet werden, wo eine Datenstruktur verarbeitet werden soll, die Einzeldaten aufweist, die in einem topologischen Zusammenhang stehen. Zum Beispiel kann eine Datenstruktur verarbeitet werden, die einer aus unterschiedlichen Tonquellen zusammengesetzten Geräuschkulisse entspricht.

Bezüglich weiterer Merkmale und Vorteile der vorliegenden Erfindung wird jedoch ausdrücklich auf die Offenbarung der Zeichnung verwiesen.

## Patentansprüche

1. Verfahren zur Verarbeitung von Datenstrukturen mittels miteinander vernetzten semantischen Einheiten, das die folgenden Schritte aufweist:
**[a]** Erfassen einer Datenstruktur; und
**[b]** Erzeugen, Analysieren, Abwandeln, Löschen und Speichern von semantischen Struktureinheiten oder deren Vernetzung aufgrund der erfaßten Datenstruktur unter Verwendung einer aus einem Netz von semantischen Wissenseinheiten bestehenden Wissensbasis, wobei
in iterativen Schritten semantische Struktureinheiten oder deren Vernetzung klassifiziert werden und aufgrund dieser Klassifikation eine spezifische Verarbeitung aktivierbar ist, welche eine jeweilige semantische Struktureinheit oder ein bestimmtes Teilnetz verändert.

2. Verfahren nach Anspruch 1, ***dadurch gekennzeichnet, daß*** eine erfaßte Datenstruktur aus mehreren Datenstrukturen besteht.

3. Verfahren nach Anspruch 1 oder 2, ***dadurch gekennzeichnet, daß*** die Verarbeitung der erfaßten Datenstruktur ein Handhaben, Analysieren, Wiedergeben, Beschreiben, Komprimieren und/oder Speichern der erfaßten Datenstruktur beinhaltet.

4. Verfahren nach einem der vorhergehenden Ansprüche, ***dadurch gekennzeichnet, daß*** semantische Struktureinheiten und semantische Wissenseinheiten semantische Einheiten sind.

5. Verfahren nach einem der vorhergehenden Ansprüche, ***dadurch gekennzeichnet, daß*** ein Typus der semantischen Einheit ein Verknüpfungsobjekt ist, das jeweils zwei beliebige semantische Einheiten derart miteinander verknüpft, daß ein Typus und/oder ein Informationsinhalt des Verknüpfungsobjekts die Beziehung der zwei semantischen Einheiten zueinander bestimmt.

6. Verfahren nach Anspruch 5, ***dadurch gekennzeichnet, daß*** ein Typus eines Verknüpfungsobjekts durch eine Bezeichnung des Verknüpfungsobjekts, durch einen Ort und/oder eine Auflistung in einer semantischen Einheit festgelegt wird, mit welcher das Verknüpfungsobjekt verbunden ist.

7. Verfahren nach Anspruch 5 oder 6, ***dadurch gekennzeichnet, daß*** ein Verknüpfungsobjekt lediglich aus einer logischen Verknüpfung, lediglich aus einem Zeiger oder lediglich aus einer eindeutigen Kennzeichnung einer semantischen Einheit besteht.

8. Verfahren nach einem der Ansprüche 5 bis 7, ***dadurch gekennzeichnet, daß*** ein bestimmtes Teilnetz als alle semantischen Einheiten eines bestimmten Typus und/oder einer bestimmten Klassifikation in einer bestimmten Entfernung definiert ist, die ausgehend von einer oder mehreren bestimmten semantischen Einheiten direkt oder indirekt über andere semantische Einheiten eines bestimmten Typus mit dieser oder diesen verknüpft sind.

9. Verfahren nach einem der Ansprüche 5 bis 8, ***dadurch gekennzeichnet, daß*** durch Verknüpfungsobjekte erzeugte Verknüpfungen durch Eintrag eines Gewichts in einen Informationsinhalt gewichtet werden.

10. Verfahren nach Anspruch 9, ***dadurch gekennzeichnet, daß*** ein bestimmtes Teilnetz aus allen semantischen Einheiten besteht, die ausgehend von einer oder mehreren bestimmten semantischen Einheiten direkt oder indirekt über andere semantische Einheiten mit dieser oder diesen verknüpft sind, und bei Aufmultiplizieren der in den Verknüpfungsobjekten jeweils festgelegten Gewichte entlang des Verknüpfungswegs erreichbar sind, ohne daß ein vorbestimmter Schwellenwert überoder unterschritten wird.

11. Verfahren nach einem der Ansprüche 5 bis 10, ***dadurch gekennzeichnet, daß*** folgende Merkmale zur Klassifikation von semantischen Struktureinheiten heranziehbar sind: Merkmale, die sich auf die Eigenschaft von semantischen Struktureinheiten beziehen, ohne die Analyse anderer semantischer Struktureinheiten oder der Beziehungen zu diesen; Merkmale, die sich durch eine Analyse einer Eigenschaft der vernetzten Umgebung einer semantischen Struktureinheit ergeben; Merkmale, die sich durch einen Vergleich einer Eigenschaft einer semantischen Struktureinheit mit einer entsprechenden Eigenschaft ihrer vernetzten Umgebung ergeben; und Merkmale, die sich durch einen Vergleich einer Eigenschaft einer semantischen Struktureinheit mit einer entsprechenden Eigenschaft eines bestimmten Teilnetzes in dem gesamten Netz von semantischen Struktureinheiten ergeben.

12. Verfahren nach einem der Ansprüche 5 bis 11, ***dadurch gekennzeichnet, daß*** semantische Struktureinheiten Strukturobjekte, semantische Struktureinheiten verknüpfende Verknüpfungsobjekte oder Netze/Teilnetze von semantischen Struktureinheiten sind.

13. Verfahren nach Anspruch 12, ***dadurch gekennzeichnet, daß*** Strukturobjekte entsprechend der Topologie der erfaßten Datenstruktur zusammenhängend sind.

14. Verfahren Anspruch 12 oder 13, ***dadurch gekennzeichnet, daß*** Strukturobjekte jeweils an einen bestimmten topologischen Bereich der erfaßten Datenstruktur gebunden sind und diesen und/oder Eigenschaften von ihm repräsentieren und/oder daß Strukturobjekte nicht oder nicht ausschließlich an einen bestimmten Bereich der erfaßten Datenstruktur gebunden sind, sondern eine in der Datenstruktur nicht direkt enthaltene Information ergänzen.

15. Verfahren nach einem der Ansprüche 12 bis 14, ***dadurch gekennzeichnet, daß*** das Netz von semantischen Wissenseinheiten die folgenden Typen von semantischen Wissenseinheiten aufweist: Verknüpfungsobjekte, die semantische Wissenseinheiten untereinander verknüpfen; Merkmalsobjekte, die Merkmalsbeschreibungen bezüglich eines bestimmten Merkmals enthalten und einen Auswertealgorithmus bezüglich eines bestimmten Merkmals beschreiben; Analyseobjekte, die durch Verknüpfung ein oder mehrere Merkmalsobjekte enthalten; Prozessierungsobjekte, die jeweils Algorithmen, mittels denen diejenigen semantischen Einheiten, mit denen diese verknüpft sind, und/oder ein bestimmtes-Teilnetz veränderbar sind, und Ablaufsteuerungen bezüglich dieser Algorithmen enthalten; und Klassenobjekte, die jeweils eine Klasse repräsentieren und ein Analyseobjekt und/oder ein Prozessierungsobjekt enthalten, wobei mittels des Klassenobjekts semantische Einheiten analysiert, einer Klasse zugeordnet und/oder verändert werden.

16. Verfahren nach Anspruch 15, ***dadurch gekennzeichnet, daß*** auch eine Zugehörigkeit und/oder ein Zugehörigkeitswert einer semantischen Struktureinheit bezüglich einer Klasse als Eigenschaft für das bestimmte Merkmal nutzbar ist.

17. Verfahren nach Anspruch 16, ***dadurch gekennzeichnet, daß*** eine jeweilige semantische Struktureinheit über ein klassifizierendes Verknüpfungsobjekt mit einem Klassenobjekt verknüpft wird, wobei das klassifizierende Verknüpfungsobjekt entweder ein analysierendes klassifizierendes Verknüpfungsobjekt, das die Zugehörigkeit oder der Zugehörigkeitswert zu der durch das Klassenobjekt repräsentierten Klasse feststellt, oder ein zuordnendes klassifizierendes Verknüpfungsobjekt ist, das eine semantische Struktureinheit der durch das Klassenobjekt repräsentierten Klasse mittels der Verknüpfung dem Klassenobjekt zuordnet.

18. Verfahren nach Anspruch 17, ***dadurch gekennzeichnet, daß*** Prozessierungsobjekte jeweils mit bestimmten Klassenobjekten verknüpft sind und diejenigen semantischen Einheiten, die mit einem jeweiligen Klassenobjekt über ein zuordnendes klassifizierendes Verknüpfungsobjekt verknüpft sind, und/oder deren jeweilige vernetzte Umgebungen verändern.

19. Verfahren nach einem der Ansprüche 15 bis 18, ***dadurch gekennzeichnet, daß*** ein Typus eines Verknüpfungsobjekts ein Merkmalsverknüpfungsobjekt ist, das ein Merkmalsobjekt mit einem Analyseobjekt verknüpft, wobei das Merkmalsverknüpfungsobjekt in den Merkmalsobjekten beschriebene Merkmalsbeschreibungen und Auswertealgorithmen auf semantische Einheiten anwendet, die mit einem jeweiligen Analyseobjekt verknüpft sind.

20. Verfahren nach einem der Ansprüche 15 bis 19, ***dadurch gekennzeichnet, daß*** Merkmalsobjekte innerhalb eines Analyseobjekts zu Gruppen zusammengefaßt werden und/oder daß Unter-Gruppen von Merkmalsobjekten und/oder Merkmalsobjekte derart zu Ober-Gruppen zusammengefaßt werden, daß Auswertungsergebnisse der Auswertealgorithmen der Merkmalsobjekte und/oder der Unter-Gruppen innerhalb einer Gruppe über eine einheitliche Logik miteinander zu einem Auswertungsergebnis der Ober-Gruppe verknüpft werden.

21. Verfahren nach Anspruch 20, ***dadurch gekennzeichnet, daß*** die Verknüpfung und Verarbeitung der Auswertungsergebnisse der Auswertealgorithmen von Merkmalsobjekten und/oder Gruppen von Merkmalsobjekten innerhalb eines Analyseobjekts auf einer Fuzzy-Logik beruht.

22. Verfahren nach einem der Ansprüche 15 bis 21, ***dadurch gekennzeichnet, daß*** Strukturobjekte auch als Bestandteil von Merkmalsobjekten für eine Merkmalsauswertung heranziehbar sind.

23. Verfahren nach einem der Ansprüche 15 bis 22, ***dadurch gekennzeichnet, daß*** einzelne Strukturobjekte über eine Schnittstelle als typische Vertreter für jeweils eine Klasse markiert und die restlichen Strukturobjekte aufgrund dieser typischen Vertreter mittels eines Nearest-Neighbour-Verfahrens in einem vorgegebenen Merkmalsraum automatisch klassifiziert werden.

24. Verfahren nach einem der Ansprüche 15 bis 23, ***dadurch gekennzeichnet, daß*** semantische Struktureinheiten mittels einer Clusteranalyse in einem vorgegebenen Merkmalsraum zu Gruppen von ähnlichen semantischen Struktureinheiten für eine weitere Verarbeitung zusammengefaßt werden.

25. Verfahren nach einem der Ansprüche 15 bis 24, ***dadurch gekennzeichnet, daß*** Klassenobjekte zusammen mit den zu ihnen gehörenden Merkmalsobjekten derart automatisch erzeugt werden, daß sie jeweils ein Cluster von ähnlichen semantischen Struktureinheiten in einem vorgegebenen Merkmalsraum beschreiben.

26. Verfahren nach einem der Ansprüche 15 bis 25, ***dadurch gekennzeichnet, daß*** Klassenobjekte aufgrund der Merkmalsbeschreibungen der in ihnen enthaltenen Merkmalsobjekte und/oder aufgrund der Eigenschaften der in ihnen zusammengefaßten semantischen Struktureinheiten klassifiziert werden und auf diese Weise zu Ober-Klassenobjekten zusammenfaßbar sind.

27. Verfahren nach einem der Ansprüche 19 bis 26, ***dadurch gekennzeichnet, daß*** eine Gewichtung bezüglich eines Merkmalsverknüpfungsobjekts verwendet wird, um festzulegen, wie stark ein in einem Merkmalsobjekt enthaltenes Auswertungsergebnis des Auswertealgorithmus bei einer Gesamtauswertung von mehreren Merkmalsobjekten berücksichtigt wird.

28. Verfahren nach einem der Ansprüche 15 bis 27, ***dadurch gekennzeichnet, daß*** ein Typus eines Verknüpfungsobjekts ein hierarchisches Ähnlichkeitsverknüpfungsobjekt ist, das Klassenobjekte hierarchisch miteinander verknüpft und Analyseobjekte und/oder Merkmalsobjekte und/oder Prozessierungsobjekte von Ober-Klassenobjekten zu Unter-Klassenobjekten vererbt.

29. Verfahren nach Anspruch 28, ***dadurch gekennzeichnet, daß*** Merkmalsobjekte über Analyseobjekte mit einem Klassenobjekt verknüpft sind.

30. Verfahren nach Anspruch 29, ***dadurch gekennzeichnet, daß*** die Vererbung abhängig davon stattfindet, daß in einem Informationsinhalt eines jeweiligen Analyseobjekts und/oder Prozessierungsobjekts vermerkt ist, ob es vererbt wird oder nicht.

31. Verfahren nach Anspruch 28, ***dadurch gekennzeichnet, daß*** Merkmalsobjekte direkt mit einem Klassenobjekt verknüpft sind.

32. Verfahren nach Anspruch 31, ***dadurch gekennzeichnet, daß*** die Vererbung abhängig davon stattfindet, daß in einem Informationsinhalt eines jeweiligen Merkmalsobjekts und/oder Prozessierungsobjekts vermerkt ist, ob es vererbt wird oder nicht.

33. Verfahren nach einem der Ansprüche 15 bis 32, ***dadurch gekennzeichnet, daß*** eine Sonderform eines Strukturobjekts ein Datenpunktobjekt ist, daß jeweils den topologischen Ort eines Einzeldatums der erfaßten Datenstruktur sowie das jeweilige Einzeldatum repräsentiert.

34. Verfahren nach Anspruch 33, ***dadurch gekennzeichnet, daß*** mittels einer in dem Netz von semantischen Einheiten enthaltenen Hierarchie von Struktureinheiten, in welcher Strukturobjekte, die einen kleineren Bereich der erfaßten Datenstruktur repräsentieren, im Sinne einer Einbettungshierarchie als Unter-Strukturobjekte topologisch eindeutig mit größeren Ober-Strukturobjekten, die einen gleich großen oder größeren Bereich der erfaßten Datenstruktur repräsentieren, verknüpft sind, die erfaßte Datenstruktur durch Strukturobjekte in unterschiedlichen Auflösungen gleichzeitig repräsentierbar ist, wobei eine unterste Ebene einer derartigen Hierarchie aus Datenpunktobjekten besteht.

35. Verfahren nach Anspruch 34, ***dadurch gekennzeichnet, daß*** durch Schritt **[b]** hervorgerufene Veränderungen der vernetzten Umgebung ein Löschen einer semantischen Struktureinheit; ein Verknüpfen einer semantischen Struktureinheit mit einer anderen semantischen Struktureinheit; ein Ändern eines Informationsinhalts einer semantischen Struktureinheit; ein Fusionieren von zwei oder mehr bereits vorhandenen Strukturobjekten; ein Erzeugen eines neuen Strukturobjekts als Ober-Strukturobjekt von einem oder mehreren bereits vorhandenen Strukturobjekten sowie ein Verknüpfen von ihm mit diesen; ein Ausgliedern eines Unter-Strukturobjekts aus seinem bisherigen Ober-Strukturobjekt, indem die Verknüpfung zwischen diesen aufgelöst wird, wodurch sich ein zu dem Ober-Strukturobjekt zugehöriger Datenstrukturbereich entsprechend verkleinert; ein Verknüpfen eines Strukturobjekts als Ober-Strukturobjekt mit einem anderen Strukturobjekt als Unter-Strukturobjekt, wodurch sich ein zu dem Ober-Strukturobjekt zugehöriger Datenstrukturbereich entsprechend vergrößert; ein Teilen eines Strukturobjekts in zwei oder mehr Strukturobjekte auf Basis der Unter-Strukturobjekte; und ein zuordnendes Verknüpfen einer semantischen Einheit mit einem Klassenobjekt und demgemäß ein Zuordnen der semantischen Einheit zu der durch das Klassenobjekt repräsentierten Klasse sind.

36. Verfahren nach Anspruch 34 oder 35, ***dadurch gekennzeichnet, daß*** in einem Prozessierungsobjekt-enthaltene Algorithmen alle lokalen Operationen bezüglich einer jeweiligen semantischen Struktureinheit und/oder deren vernetzter Umgebung innerhalb des hierarchischen Netzes von semantischen Struktureinheiten betreffen.

37. Verfahren nach einem der Ansprüche 34 bis 36, ***dadurch gekennzeichnet, daß*** in der Hierarchie von Struktureinheiten ein Datenstrukturbereich, den jedes Strukturobjekt repräsentiert, sich eindeutig aus den Datenstrukturbereichen zusammensetzt, die durch die jeweiligen Unter-Strukturobjekte des jeweiligen Strukturobjekts repräsentiert sind.

38. Verfahren nach einem der Ansprüche 34 bis 37, ***dadurch gekennzeichnet, daß*** das hierarchische Netz von semantischen Struktureinheiten an allen Stellen über eine einheitliche hierarchische Tiefe aufweist, wobei in diesem hierarchischen Netz jeweils ganze Ebenen von Strukturobjekten verarbeitet, erzeugt oder gelöscht werden.

39. Verfahren nach einem der Ansprüche 34 bis 38, ***dadurch gekennzeichnet, daß*** ein Typus eines Verknüpfungsobjekts ein hierarchisches Verknüpfungsobjekt ist, das Strukturobjekte hierarchisch als Ober-Strukturobjekte und Unter-Strukturobjekte miteinander verbindet.

40. Verfahren nach Anspruch 39, ***dadurch gekennzeichnet, daß*** bei einem Auflösen einer hierarchischen Verknüpfung mittels des hierarchischen Verknüpfungsobjekts eines Unter-Strukturobjekts zu seinem bisherigen Ober-Strukturobjekt eine Zusammenhängendheit des Ober-Strukturobjekts bezüglich einer Topologie der erfaßten Datenstruktur überprüft wird und bei einer Nicht-Zusammenhängendheit das Ober-Strukturobjekt in mehrere Strukturobjekte geteilt wird, die jeweils einen durch ein Aushängen des Unter-Strukturobjekts entstandenen zusammenhängenden Datenstrukturbereich des bisherigen Ober-Strukturobjekts repräsentieren.

41. Verfahren nach einem der Ansprüche 39 oder 40, ***dadurch gekennzeichnet, daß*** ein Verfahren einer Randoptimierung derart durchgeführt wird, daß alle Unter-Strukturobjekte, die sich am Rand eines Ober-Strukturobjekts befinden, dahingehend analysiert werden, ob sie nach Maßgabe eines vorzugebenden Kriteriums besser zu einem zu dem Ober-Strukturobjekt benachbarten Strukturobjekt als zu dem bisherigen Ober-Strukturobjekt passen, und in diesem Fall eine hierarchische Verknüpfung mittels des hierarchischen Verknüpfungsobjekts zu ihrem bisherigen Ober-Strukturobjekt aufgelöst und eine neue hierarchische Verknüpfung mittels des hierarchischen Verknüpfungsobjekts zu dem besser passenden Ober-Strukturobjekt erzeugt wird.

42. Verfahren nach einem der Ansprüche 15 bis 41, ***dadurch gekennzeichnet, daß*** Klassenobjekte und/oder Teilnetze von Klassenobjekten innerhalb eines Prozessierungsobjekts und/oder eines Merkmalsobjekts wiederum Bestandteil des Algorithmus bzw. Auswertealgorithmus sind.

43. Verfahren nach einem der Ansprüche 15 bis 42, ***dadurch gekennzeichnet, daß*** Klassenobjekte bestimmte Attribute, die in ihnen beschrieben sind, auf derartige semantische Einheiten übertragen, die mit ihnen zuordnend verknüpft sind.

44. Verfahren nach einem der vorhergehenden Ansprüche, ***dadurch gekennzeichnet, daß*** die erfaßte Datenstruktur eine digitale Bildinformation ist.

45. Verfahren nach Anspruch 44, ***dadurch gekennzeichnet, daß*** die Bildinformation eine beliebige Bildgebung, eine beliebige Dimensionalität, eine beliebige Kanalzahl und/oder Zeitfolgen aufweist.

46. Datenträger, der in ein Computersystem einsetzbar ist und auf dem ein Programmcode gespeichert ist, wobei das Computersystem in einem eingesetzten Zustand des Datenträgers in das Computersystem und einem aktivierten Zustand des Programmcodes auf dem Datenträger ein Verfahren nach einem der vorhergehenden Ansprüche durchführt.

## Claims

1. A method for processing data structures with the aid of networked semantic units, said method comprising the following steps:
**[a]** acquiring a data structure; and
**[b]** generating, analyzing, modifying, deleting and storing semantic structure units or networking them on the basis of the acquired data structure while using a knowledge base comprised of a network of semantic knowledge units, wherein
semantic structure units or the networking thereof are classified in iterative steps, and based on this classification a specific processing may be activated which modifies a respective semantic structure unit or a particular partial network.

2. The method of claim 1, ***characterized in that*** an acquired data structure consists of a plurality of data structures.

3. The method of claim 1 or 2, ***characterized in that*** processing said acquired data structure involves handling, analyzing, reproducing, describing, compressing and/or storing said acquired data structure.

4. The method of any one of the preceding claims, ***characterized in that*** semantic structure units and semantic knowledge units are semantic units.

5. The method of any one of the preceding claims, ***characterized in that*** a type of said semantic unit is a linking object linking two arbitrary semantic units with each other such that a type and/or an informational content of said linking objects determines the relationship of said two semantic units among each other.

6. The method of claim 5, ***characterized in that*** a type of a linking object is determined by a designation of said linking object, by a location and/or an enumeration in a semantic unit to which said linking object is connected.

7. The method of claim 5 or 6, ***characterized in that*** a linking object consists only of a logic link, only of a pointer, or only of an unambiguous designation of a semantic unit.

8. The method of any one of claims 5 to 7, ***characterized in that*** a particular partial network is defined as all semantic units of a particular type and/or of a particular classification at a particular distance which, starting out from one or a plurality of particular semantic units, are linked therewith either directly or indirectly via other semantic units of a particular type.

9. The method of any one of claims 5 to 8, ***characterized in that*** links generated through linking objects are weighted by entering a weighting into an informational content.

10. The method of claim 9, ***characterized in that*** a particular partial network is comprised of all semantic units which, starting out from one or a plurality of particular semantic units, are linked therewith either directly or indirectly, and which may be reached by continuous multiplication of the respective weightings determined in the linking objects along the linking path without exceeding or dropping below a predetermined threshold.

11. The method of any one of claims 5 to 10, ***characterized in that*** the following features may be made use of for classification of semantic structure units: features relating to the property of semantic structure units, without the analysis of other semantic structure units or the relationships with them; features resulting from analysis of a property of the networked environs of a semantic structure unit; features resulting from a comparison of a property of a semantic structure unit with a corresponding property of its networked environs; and features resulting from a comparison of a property of a semantic structure unit with a corresponding property of a particular partial network in said entire network of semantic structure units.

12. The method of any one of claims 5 to 11, ***characterized in that*** semantic structure units are structure objects, linking objects linking semantic structure units, or networks/partial networks of semantic structure units.

13. The method of claim 12, ***characterized in that*** structure objects are coherent in accordance with the topology of said acquired data structure.

14. The method of claim 12 or 13, ***characterized in that*** structure objects are each tied in with a particular topological area of said acquired data structure and represent it and/or represent properties thereof, and/or **in that** structure objects are not or not exclusively tied in with a particular area of said acquired data structure but supplement information not directly contained in said data structure.

15. The method of any one of claims 12 to 14, ***characterized in that*** said network of semantic knowledge units comprises the following types of semantic knowledge units: linking objects linking said semantic knowledge units among each other; feature objects containing feature descriptions with regard to a particular feature and describing an evaluation algorithm with regard to a particular feature; analysis objects containing one or more feature objects through linking; processing objects each containing algorithms whereby those semantic units to which they are linked and/or a particular partial network may be modified, and sequencing controls with regard to these algorithms; and class objects each representing a class and containing an analysis object and/or a processing object, wherein semantic units are analyzed, allocated to a class and/or modified with the aid of said class objects.

16. The method of claim 15, ***characterized in that*** a pertinence and/or a pertinence value of a semantic structure unit is also usable with regard to a class as a property for said particular feature.

17. The method of claim 16, ***characterized in that*** a respective semantic structure unit is linked with a class object via a classifying linking object, wherein said classifying linking object either is an analyzing classifying linking object that determines the pertinence or the pertinence value to the class represented by said class object, or is an allocating classifying linking object that allocates a semantic structure unit of the class represented by said class object through the intermediary of said link to said class object.

18. The method of claim 17, ***characterized in that*** processing objects are each linked with particular class objects and modify those semantic units linked with a respective class object via an allocating classifying linking object and/or the respective networked environs thereof.

19. The method of any one of claims 15 to 18, ***characterized in that*** a type of a linking object is a feature linking object that links a feature object with an analysis object, wherein said feature linking object applies feature descriptions and evaluation algorithms described in said feature objects to semantic units that are linked with a respective analysis object.

20. The method of any one of claims 15 to 19, ***characterized in that*** feature objects within an analysis object are subsumed into groups, and/or that sub-groups of feature objects and/or feature objects are subsumed into super-groups in such a way that evaluation results of said evaluation algorithms of said feature objects and/or of said sub-groups are linked with each other within one group via a unified logic into an evaluation result of said super-group.

21. The method of claim 20, ***characterized in that*** linking and processing of the evaluation results of said evaluation algorithms of feature objects and/or groups of feature objects within an analysis object are based on fuzzy logic.

22. The method of any one of claims 15 to 21, ***characterized in that*** structure objects may also be referred to as constituents of feature objects for a feature evaluation.

23. The method of any one of claims 15 to 22, ***characterized in that*** single structure objects are designated via an interface as typical representatives for one respective class, and with the aid of these typical representatives, the remaining structure objects are automatically classified through a Nearest-Neighbour method in a predetermined feature space.

24. The method of any one of claims 15 to 23, ***characterized in that*** semantic structure units are subsumed into groups of similar semantic structure units through a cluster analysis in a predetermined feature space for further processing.

25. The method of any one of claims 15 to 24, ***characterized in that*** class objects, together with the feature objects pertaining to them, are automatically generated such that they each describe a cluster of similar semantic structure units within a predetermined feature space.

26. The method of any one of claims 15 to 25, ***characterized in that*** class objects are classified on the basis of the feature descriptions of the feature objects contained in them and/or on the basis of the properties of the structure units subsumed in them, and in this manner may be subsumed in super-class objects.

27. The method of any one of claims 19 to 26, ***characterized in that*** a weighting with regard to a feature linking object is used to determine a degree in which an evaluation result of said evaluation algorithm contained in a feature object is taken into consideration in an overall evaluation of a plurality of feature objects.

28. The method of any one of claims 15 to 27, ***characterized in that*** one type of a linking object is a hierarchical similarity linking object that hierarchically links class objects and transfers analysis objects and/or feature objects and/or processing objects from super-class objects to sub-class objects by heredity.

29. The method of claim 28, ***characterized in that*** feature objects are linked with a class object via analysis objects.

30. The method of claim 29, ***characterized in that*** heredity depends on it being recorded in an informational content of a respective analysis object and/or processing object whether or not it is transferred by heredity.

31. The method of claim 28, ***characterized in that*** feature objects are linked directly with a class object.

32. The method of claim 31, ***characterized in that*** heredity depends on it being recorded in an informational content of a respective feature object and/or processing object whether or not it is transferred by heredity.

33. The method of any one of claims 15 to 32, ***characterized in that*** a special form of a structure object is a datapoint object that represents the respective topological location of a single datum of said acquired data structure and said respective single datum.

34. The method of claim 33, ***characterized in that*** by means of a hierarchy of structure units contained in said network of semantic units, wherein structure objects representing a smaller area of said acquired data structure are linked in a topologically unambiguous manner, in the sense of an embedding hierarchy, as sub-structure objects with larger super-structure objects representing an area of said acquired data structure having an equal or greater size, said acquired data structure may be represented through structure objects in various degrees of resolution at a same time, with a bottommost plane of such a hierarchy consisting of datapoint objects.

35. The method of claim 34, ***characterized in that*** modifications of said networked environs brought about through step **[b]** are: a deletion of a semantic structure unit; a linking of a semantic structure unit with another semantic structure unit; a modification of an informational content of a semantic structure unit; a fusioning of two or more already existing structure objects; a generating of a new structure object as a super-structure object of one or several already existing structure objects and a linking thereof with these; an exclusion of a sub-structure object from its previous super-structure object by obliterating the linking between them, with a data structure area pertaining to said super-structure object accordingly being reduced in size; a linking of a structure object as a super-structure object with another structure object as a sub-structure object, with a data structure area pertaining to said super-structure object correspondingly increasing in size; a dividing of a structure object into two or more structure objects on the basis of said sub-structure object; and an allocating linking of a semantic unit with a class object, and accordingly an allocation of said semantic unit to the class represented by said class object.

36. The method of claim 34 or 35, ***characterized in that*** algorithms contained in a processing object concern all local operations with regard to a respective semantic structure unit and/or the networked environs thereof within the hierarchical network of semantic structure units.

37. The method of any one of claims 34 to 36, ***characterized in that*** in said hierarchy of structure units a data structure area represented by each structure object is unambiguously composed of those data structure areas represented by the respective sub-structure objects of said respective structure object.

38. The method of any one of claims 34 to 37, ***characterized in that*** said hierarchical network of semantic structure units has a unified hierarchical depth in all locations, with respective entire planes of structure objects being processed, generated, or deleted in this hierarchical network.

39. The method of any one of claims 34 to 38, ***characterized in that*** one type of a linking object is a hierarchical linking object that hierarchically interconnects structure objects as super-structure objects and sub-structure objects.

40. The method of claim 39, ***characterized in that*** upon obliteration of a hierarchical link by means of the hierarchical linking object of a sub-structure object with its previous super-structure object, a property of coherence of said super-structure object with regard to a topology of said acquired data structure is examined, and in a case of non-coherence said super-structure object is divided into a plurality of structure objects each representing one coherent data structure area of the previous super-structure object brought about through removing said sub-structure object.

41. The method of any one of claims 39 or 40, ***characterized in that*** a process of boundary optimization is performed such that all sub-structure objects located at the boundary of a super-structure object are analyzed to the effect whether, in accordance with a criterion to be predetermined, they better match a structure object neighboring said super-structure object than the previous super-structure object, and in the latter case a hierarchical link with the previous super-structure object thereof via said hierarchical linking object is obliterated, and a new hierarchical link with said better-matching super-structure object is generated with the aid of said hierarchical linking object.

42. The method of any one of claims 15 to 41, ***characterized in that*** class objects and/or partial networks of class objects within a processing object and/or a feature object in turn are constituents of said algorithm or evaluation algorithm.

43. The method of any one of claims 15 to 42, ***characterized in that*** class objects transfer particular attributes described in them to semantic units allocatingly linked with them.

44. The method of any one of the preceding claims, ***characterized in that*** said acquired data structure is a digital image information.

45. The method of claim 44, ***characterized in that*** said image information exhibits any imaging, any dimensionality, any number of channels and/or temporal sequences.

46. Data carrier usable in a computer system and having a program code recorded on it, wherein under a condition of said data carrier being inserted into said computer system and an activated condition of said program code on said data carrier, said computer system performs a method of any one of the preceding claims.

## Revendications

1. Procédé pour traiter des structures de données à l'aide d'unités sémantiques maillées entre elles, qui comprend les étapes suivantes consistant à:
[a] détecter une structure de données; et
[b] produire, analyser, modifier, effacer et mémoriser des unités de structures sémantiques ou leur maillage sur la base de la structure de données détectée, moyennant l'utilisation d'une base de connaissances constituée
par un réseau d'unités de connaissances sémantiques, selon lequel, selon des pas itératifs, des unités de structures sémantiques ou leur maillage sont classées et, sur la base de cette classification, un traitement spécifique, qui modifie une unité de structure sémantique respective ou une partie de réseau déterminée ou un réseau partiel déterminé, est activé.

2. Procédé selon la revendication 1, **caractérisé en ce qu'**une structure de données détectée est constituée de plusieurs structures de données.

3. Procédé selon la revendication 1 ou 2, **caractérisé en ce que** le traitement de la structure de données détectée inclut une manipulation, une analyse, une reproduction, une écriture, une compression et/ou une mémorisation de la structure de données détectée.

4. Procédé selon l'une des revendications précédentes, **caractérisé en ce que** des unités de structures sémantiques et des unités de connaissances sémantiques sont des unités sémantiques.

5. Procédé selon l'une des revendications précédentes, **caractérisé en ce qu'**un type de l'unité sémantique est un objet de combinaison, qui combine entre elles respectivement deux unités sémantiques quelconques de telle sorte qu'un type et/ou un contenu en informations de l'objet de combinaison détermine la relation des deux unités sémantiques l'une par rapport à l'autre.

6. Procédé selon la revendication 5, **caractérisé en ce qu'**un type d'un objet de combinaison est fixé par une relation de l'obje de combinaison, par un emplacement et/ou par une liste dans une unité sémantique, à laquelle l'objet de combinaison est lié.

7. Procédé selon la revendication 5 ou 6, **caractérisé en ce qu'**un objet de combinaison est constitué uniquement par une combinaison logique, uniquement par un vecteur ou uniquement par une caractérisation nette d'une unité sémantique.

8. Procédé selon l'une des revendications 5 à 7, **caractérisé en ce qu'**un réseau partiel déterminé est défini sous la forme de toutes les unités sémantiques d'un type déterminé et/ou d'une classification déterminée sur une distance déterminée, qui sont combinées à partir d'une ou de plusieurs unités sémantiques déterminées, directement ou indirectement par l'intermédiaire d'autres unités sémantiques d'un type déterminé, à cette unité ou à ces unités.

9. Procédé selon l'une des revendications 5 à 8, **caractérisé en ce que** les combinaisons produites par les objets de combinaisons sont pondérées par introduction d'un poids dans un contenu d'information.

10. Procédé selon la revendication 9, **caractérisé en ce qu'**un réseau partiel déterminé est constitué par toutes les unités sémantiques qui sont combinées à partir d'une ou de plusieurs unités sémantiques déterminées, directement ou indirectement au moyen d'autres unités sémantiques, à cette unité ou à ces unités, et peuvent être atteintes, lors de la multiplication par les poids fixés respectivement dans les objets de combinaison, le long du trajet de combinaison sans qu'une valeur de seuil prédéterminée soit dépassée par le haut ou par le bas.

11. Procédé selon l'une des revendications 5 à 10, **caractérisé en ce qu'**on peut utiliser des caractéristiques indiquées ci-après pour la classification d'unités de structures sémantiques: caractéristiques, qui concernent la propriété d'unités de structures sémantiques, sans l'analyse d'autres unités de structures sémantiques ou des relations avec ces dernières; caractéristiques, qui fournissent une unité de structure sémantique grâce à une analyse d'une propriété de l'environnement maillé; caractéristiques, qui sont obtenues au moyen d'une comparaison d'une propriété d'une unité de structure sémantique à une propriété correspondante de son environnement maillé; et caractéristiques qui sont obtenues au moyen d'une comparaison d'une propriété d'une unité de structure sémantique à une propriété correspondant d'un réseau déterminé dans l'ensemble du réseau d'unités de structures sémantiques.

12. Procédé selon l'une des revendications 5 à 11, **caractérisé en ce que** les unités de structures sémantiques sont des objets de structures, des unités de structures sémantiques, des objets de combinaison combinant des objets de structures sémantiques ou des réseaux/des réseaux partiels d'unités de structures sémantiques.

13. Procédé selon la revendication 12, **caractérisé en ce que** les objets de structures sont réunis en fonction de la topologie de la structure détectée de données.

14. Procédé selon la revendication 12 ou 13, **caractérisé en ce que** des objets de structures sont liés respectivement à une partie topologique déterminée d'une structure de données détectée, et représentent cette partie et/ou des propriétés de cette partie, et/ou que des structures des objets de structures ne sont pas liées ou ne sont pas liées exclusivement à une partie déterminée de la structure de données détectée, mais complètent une information non contenue directement dans la structure de données.

15. Procédé selon l'une des revendications 12 à 14, **caractérisé en ce que** le réseau d'unités de connaissances sémantiques comporte les types suivants d'unités de connaissances sémantiques: objets de combinaison, qui combinent entre elles des unités de connaissances sémantiques; objets de caractéristique, qui contiennent des descriptions concernant une caractéristique déterminée, et décrivent un algorithme d'évaluation concernant une caractéristique déterminée; objets d'analyse, qui contiennent par combinaison un ou plusieurs objets de caractéristiques; objets de traitement, qui contiennent respectivement des algorithmes, à l'aide desquels on peut modifier les unités sémantiques, avec lesquelles ces algorithmes sont combinés, et/ou un réseau partiel déterminé, et des commandes d'exécution concernant ces algorithmes et objets de classes, qui représentent respectivement une classe et contiennent un objet d'analyse et/ou un objet de traitement, les unités sémantiques étant analysées, associées à une classe et/ou modifiées au moyen de l'objet de classé.

16. Procédé selon la revendication 15, **caractérisé en ce que** l'on peut également utiliser une appartenance et/ou une valeur d'appartenance d'une unité de structure sémantique concernant une classe en tant que propriété pour la caractéristique déterminée.

17. Procédé selon la revendication 16, **caractérisé en ce qu'**une unité de structure sémantique respective est combinée à un objet de classe par l'intermédiaire d'un objet de combinaison réalisant une classification, l'objet de combinaison réalisant une classification étant un objet de combinaison réalisant une analyse, qui exécute une classification et fixe l'appartenance ou la valeur d'appartenance à la classe représentée par l'objet de classe, ou un objet de combinaison réalisant une association et exécutant un classement et qui associe une unité de structure sémantique de la classe représentant l'objet de classe au moyen de la combinaison qui associe à l'objet de classe une unité de structure sémantique de la classe représentée par l'objet de classe, au moyen de la combinaison.

18. Procédé selon la revendication 17, **caractérisé en ce que** des objets de traitement sont combinés respectivement en des objet de classe déterminés et modifient les unités sémantiques, qui sont combinées à un objet de classe respectif par l'intermédiaire d'un objet de combinaison réalisant une association et un classement, et/ou modifient leurs environnements maillés respectifs.

19. Procédé selon l'une des revendications 15 à 18, **caractérisé en ce qu'**un type d'un objet de combinaison est un objet de combinaison de caractéristique, qui combine un objet de caractéristiques à un objet d'analyse, auquel cas l'objet de combinaison de caractéristique applique des descriptions de caractéristiques, qui sont décrites dans les objets de caractéristiques, et des algorithmes d'évaluation à des unités sémantiques qui sont combinées à un objet d'analyse respectif.

20. Procédé selon l'une des revendications 15 à 19, **caractérisé en ce que** des objets de caractéristiques sont rassemblés à l'intérieur d'un objet d'analyse pour former des groupes et/ou que des sous-groupes d'objets de caractéristiques et/ou des objets de caractéristiques sont assemblés pour former des groupes de rang supérieur de telle sorte que des résultats d'évaluation des algorithmes d'évaluation des objets de caractéristiques et/ou des sous-groupes à l'intérieur d'un groupe sont combinés entre eux par l'intermédiaire d'une logique uniforme, pour former un réseau d'évaluation du groupe de rang supérieur.

21. Procédé selon la revendication 20, **caractérisé en ce que** la combinaison et le traitement des résultats d'évaluation des algorithmes d'évaluation d'objets de caractéristiques et/ou de groupes d'objets de caractéristiques à l'intérieur d'un objet d'analyse est basée sur une logique floue.

22. Procédé selon l'une des revendications 15 à 21, **caractérisé en ce que** les objets de structures peuvent être utilisés également en tant que composant d'objets de caractéristiques pour une évaluation de caractéristiques.

23. Procédé selon l'une des revendications 15 à 22, **caractérisé en ce que** des objets individuels de structures sont marqués par l'intermédiaire d'une interface en tant que représentants typiques pour respectivement une classe et les autres objets de structures sont classés automatiquement, sur la base de ce représentant typique, au moyen d'un procédé basé sur le voisin le plus proche, dans un espace prédéterminé de caractéristiques.

24. Procédé selon l'une des revendications 15 à 23, **caractérisé en ce que** les unités de structures sémantiques sont rassemblées au moyen d'une analyse de groupes dans l'espace prédéterminé de caractéristiques pour former des groupes d'unités de structures sémantiques similaires pour un autre traitement.

25. Procédé selon l'une des revendications 15 à 24, **caractérisé en ce que** des objets de classes sont produits automatiquement conjointement avec les objets de caractéristiques qui leur appartiennent, de telle sorte qu'ils décrivent chacun un groupe d'unités de structures sémantiques similaires dans un espace prédéterminé de caractéristiques.

26. Procédé selon l'une des revendications 15 à 25, **caractérisé en ce que** des objets de classes sont classés sur la base des descriptions de caractéristiques des objets de caractéristiques, qui sont contenus en eux, et/ou sur la base des propriétés des unités de structures sémantiques qui sont rassemblées en eux, et peuvent être assemblés de cette manière pour former des objets de classes supérieurs.

27. Procédé selon l'une des revendications 19 à 26, **caractérisé en ce qu'**une pondération est utilisée en rapport avec un objet de combinaison de caractéristiques pour déterminer quel degré est pris en compte dans le résultat d'évaluation, qui est contenu dans l'objet de caractéristiques de l'algorithme d'évaluation lors d'une évaluation globale de plusieurs objets de caractéristiques.

28. Procédé selon l'une des revendications 15 à 27, **caractérisé en ce qu'**un type d'un objet de combinaison est un objet hiérarchique de combinaison de similitudes, qui combine entre eux de façon hiérarchique des objets de classes et transmet des objets d'analyse et/ou des objets de caractéristiques et/ou des objets de traitement depuis des objets de classes supérieurs à des objets de classes inférieurs.

29. Procédé selon la revendication 28, **caractérisé en ce que** des objets de caractéristiques sont combinés à un objet de classe par l'intermédiaire d'objets d'analyse.

30. Procédé selon la revendication 29, **caractérisé en ce que** la transmission s'effectue en fonction du fait que dans un contenu d'information d'un objet d'analyse respectif et/ou d'un objet de traitement respectif il est indiqué que ce dernier est transmis ou non.

31. Procédé selon la revendication 28, **caractérisé en ce que** les objets de caractéristiques sont combinés directement à un objet de classe.

32. Procédé selon la revendication 31, **caractérisé en ce que** la transmission s'effectue indépendamment du fait que dans un contenu d'informations d'un objet de caractéristique respectif et/ou d'un objet de traitement respectif il est indiqué que ce dernier est transmis ou non.

33. Procédé selon l'une des revendications 15 à 32, **caractérisé en ce qu'**une forme particulière d'un objet de structure est un objet de point de données, qui représente respectivement l'emplacement topologique d'une donnée individuelle de la structure détectée de données, ainsi que la date individuelle respective.

34. Procédé selon la revendication 33, **caractérisé en ce qu'**à l'aide d'une hiérarchie d'unités de structures, qui est contenue dans le réseau d'unités sémantiques et dans laquelle les objets de structures, qui représentent une zone plus petite de la structure détectée de données, sont combinés d'une manière nette de façon topologique au sens d'une hiérarchie d'insertion, en tant qu'objets de structures inférieure, et ce avec les objets de structures supérieures plus grands, qui représentent une partie d'une taille identique ou supérieure de la structure de données détectée, et que la structure de données détectée peut être représentée simultanément par des objets de structures avec des résolutions différentes, un plan le plus inférieur d'une telle hiérarchie étant constitué par les objets de points de données.

35. Procédé selon la revendication 34, **caractérisé en ce que** des modifications provoquées au moyen du pas [b], de l'environnement maillé, sont un effacement d'une unité de structure sémantique, une combinaison de l'unité de structure sémantique avec une autre unité de structure sémantique; une modification d'un contenu en informations d'une unité de structure sémantique; une fusion de deux ou de plus de deux objets de structures déjà existants; une production d'un nouvel objet de structure en tant qu'objet de structure supérieur d'un ou de plusieurs objets de structures déjà existants ainsi qu'une combinaison de cet objet de structure avec ces derniers; une séparation d'un objet de structure inférieur à partir d'un objet de structure supérieur présent jusqu'alors par le fait que la combinaison entre eux est supprimée, ce qui a pour effet qu'une zone de structure de données appartenant à l'objet de structure supérieur est réduite de façon correspondante; une combinaison d'un objet de structure en tant qu'objet de structure supérieur avec un autre objet de structure en tant qu'objet de structure inférieur, ce qui augmente de façon correspondante une zone de structure de données associée à l'objet de structure supérieur; division d'un objet de structure en deux ou plus de deux objets de structure sur la base des objets de structure inférieurs, et une combinaison réalisant une association, d'une unité sémantique à un objet de classe et par conséquent une association d'une unité sémantique à la classe représentant l'objet de classe.

36. Procédé selon la revendication 34 ou 35, **caractérisé en ce que** des algorithmes contenus dans un objet de traitement concernent toutes les opérations locales relatives à une unité de structure sémantique respective et/ou à son environnement maillé à l'intérieur du réseau hiérarchique d'unités de structures sémantiques.

37. Procédé selon l'une des revendications 34 à 36, **caractérisé en ce que** dans la hiérarchie d'unités de structures, une zone de structures de données, qui représente chaque objet de structures se compose de façon nette des zones de structures de données, qui sont représentées par les objets de structures inférieurs respectifs de l'objet de structure respectif.

38. Procédé selon l'une des revendications 34 à 37, **caractérisé en ce que** le réseau hiérarchique d'une unité de structure sémantique comporte, en tous les emplacements, une profondeur hiérarchique uniforme, auquel cas dans ce réseau hiérarchique, respectivement des plans entiers d'objets de structures sont traités, produits ou effacés.

39. Procédé selon l'une des revendications 34 à 38, **caractérisé en ce qu'**un type d'un objet de combinaison est un objet de combinaison hiérarchique qui relie entre eux des objets d'une structure d'une manière hiérarchique en tant qu'objets de structures supérieurs et en tant qu'objets de structures inférieurs.

40. Procédé selon la revendication 39, **caractérisé en ce que**, lors d'une décomposition d'une combinaison hiérarchique au moyen de l'objet de combinaison hiérarchique d'un objet de structure inférieur avec son objet de structure supérieur existant jusqu'alors, un état de dépendance de l'objet de structure est contrôlé par rapport à une topologie de la structure de données détectée, et dans le cas d'une non appartenance, l'objet de structure supérieur est divisé en plusieurs objets de structure, qui représentent respectivement une zone continue de structures de données de l'objet de structure supérieur existant jusqu'alors, qui est apparue au moyen d'un affichage de l'objet de structure inférieur.

41. Procédé selon l'une des revendications 39 ou 40, **caractérisé en ce qu'**un procédé d'une optimisation marginale est mis en oeuvre par le fait que tous les objets de structures inférieurs, qui sont situés au bord d'un objet de structure supérieur, sont analysés afin de déterminer si, en fonction d'un critère devant être prédéterminé, les objets s'adaptent mieux à un objet de structure voisin de l'objet de structure supérieur, qu'un objet de structure supérieur existant jusqu'alors, et dans ce cas, une combinaison hiérarchique au moyen de l'objet de combinaison hiérarchique avec son objet de structure supérieur existant jusqu'alors est décomposée et une nouvelle combinaison hiérarchique est produite à l'aide de l'objet de combinaison hiérarchique pour former l'objet de structure supérieur mieux adaptés.

42. Procédé selon l'une des revendications 15 à 41, **caractérisé en ce que** des objets de classes et/ou des réseaux partiels d'objets de classes à l'intérieur d'un objet de traitement et/ou d'un objet de caractéristiques font à nouveau partie de l'algorithme ou de l'algorithme d'évaluation.

43. Procédé selon l'une des revendications 15 à 42, **caractérisé en ce que** des objets de classes transmettent des attributs déterminés, qui sont écrits en eux, à des unités sémantiques qui sont combinées à ces unités d'une manière associée.

44. Procédé selon l'une des revendications précédentes, **caractérisé en ce que** la structure de données détectée est une information d'image numérique.

45. Procédé selon la revendication 44, **caractérisé en ce que** l'information d'image comprend une production d'image quelconque des dimensions quelconques, un nombre quelconque de canaux et/ou des suites temporelles quelconques.

46. Support de données, qui peut être utilisé dans un système d'ordinateur et dans lequel est mémorisé un code de programme, le système d'ordinateur appliquant au support de données un procédé selon l'une des revendications précédentes, lorsque le support de données est dans l'état inséré dans le système d'ordinateur et que le code de programme est à l'état activé dans le support de données.
